# EUROPEAN PATENT APPLICATION

(11) **EP 2 058 619 A1**
(43) Date of publication of application: **13.05.2009**
(21) Application number: 07793004.8
(22) Date of filing: 27.08.2007
(51) Int. Cl.: F28D 20/02, B23K 1/00, B23K 1/008, F01P 3/20, B23K 101/14

(54) **HEAT ACCUMULATOR, METHOD FOR MANUFACTURING THE HEAT ACCUMULATOR, AND VEHICLE-MOUNTED THERMAL SYSTEM USING THE HEAT ACCUMULATOR**

(30) Priority: 28.08.2006 JP 2006230056; 28.08.2006 JP 2006230055; 28.08.2006 JP 2006230057
(71) Applicant: Calsonic Kansei Corporation, Saitama-shi, Saitama 331-0823 (JP)
(72) Inventor: HIYAMA, Jinichi, Saitama-shi, Saitama 331-0823 (JP)
(74) Representative: Köhler, Walter
(86) International application number: PCT/JP2007/066527
(87) International publication number: WO 2008/026532

(57) **Abstract**

In an accumulator including a vacuum heat-insulating layer 2 at the outer periphery of a liquid reserving portion 1, the liquid reserving portion 1 and the vacuum heat-insulating layer 2 are formed by stacking a plurality of tank constituting elements 10 composed of plate members of an identical cross-sectional shape. The liquid reserving portion 1 is composed of liquid reserving portion spaces 10f made to communicate by stacking the tank constituting element 10. The vacuum heat-insulating layer 2 is composed of heat insulating layer space 10e which are made to communicate by stacking the tank constituting elements 10 and are evacuated. The openings of the stacked tank constituting elements 10 at the both ends are closed with inlet and outlet cover plates 8 and 9.

## Description

### TECHNICAL FIELD

The present invention relates to a heat accumulator employed in an engine coolant circulation circuit or the like in order to accelerate engine warm up or to increase the heating performance, and relates to a method for manufacturing the heat accumulator and a vehicle-mounted thermal system including the same.

### BACKGROUND ART

A known conventional heat accumulator which stores engine coolant and keeps the heat thereof is a heat accumulator having a double structure of metallic inner and outer containers in which the gap between the containers is evacuated for thermal insulation (for reference, see Patent Document 1).

In a vehicle-mounted thermal system including the conventional heat accumulator, engine coolant which becomes hot while the vehicle is running is taken into the heat accumulator, and the hot engine coolant is stored in the heat accumulator and is kept warm while the vehicle is stopped. At the next start of the engine, the hot engine coolant in the heat accumulator is fed to the engine and a heater core for a passenger compartment heater and used in quick engine warm up and quick heating.
Patent Document 1: Japanese Patent Application Publication No. 2004-20027

### DISCLOSURE OF THE INVENTION

### PROBLEMS TO BE SOLVED BY THE INVENTION

However, the conventional heat accumulator is composed of the inner and outer containers formed by drawing metallic plates. Accordingly, when there is a need to change necessary capacity of the heat accumulator for the purpose of application to different types of vehicles or the like, the conventional heat accumulator cannot respond to the change in necessary capacity. It is therefore necessary to change the processing die or make a new processing die, thus causing an increase in cost, a loss for setup at manufacturing, and the like.

Moreover, in manufacturing the conventional heat accumulator, metallic plates are drawn and welded into main components of the inner and outer containers. The inner and outer containers are joined to other components with a space between the containers, and then the components are fixed by welding or the like, so that a container is manufactured. After the container is manufactured, evacuation is performed for the container to form a vacuum heat-insulating layer at an entirely different process, thus manufacturing the heat accumulator. When the evacuation is performed in the air atmosphere using a vacuum pump at the evacuation step, the degree of vacuum of the vacuum heat-insulating layer varies for each product. In addition, the fixing step of fixing the components and the evacuation step of forming the vacuum heat-insulating layer are performed at the steps entirely different from each other, and it takes a great deal of labor hours and efforts to manufacture the heat accumulator.

Furthermore, in the vehicle-mounted thermal system including the conventional heat accumulator, at the start of the engine, during the first cycle of circulation cycles of the engine coolant, hot engine coolant is fed to the engine or the heater core of the passenger compartment heater, but during and after the second cycle, the hot engine coolant is affected by temperature of a system environment including the engine, air, and the like and moreover is mixed with cold engine coolant. Accordingly, the hot coolant has heat instantly removed, and the cold engine coolant starts to circulate. Accordingly, the quick warm-up performance of the engine and quick heating performance in the passenger compartment cannot meet the expectations.

The present invention has been made in the light of the aforementioned problems, and a first object of the present invention is to provide a heat accumulator capable of easily responding a request for changing the necessary capacity without an increase in cost by just increasing or decreasing the number of stacked tank constituting elements.

A second object of the present invention is to provide a method of manufacturing a heat accumulator which is capable of forming a vacuum heat-insulating layer having an unvarying and stable vacuum quality and is capable of simplifying the process to reduce the manufacturing efforts and shorten the manufacturing time.

Another object is to provide a compact heat accumulator having high heat storage performance. Moreover, a third object of the present invention is to provide a vehicle-mounted thermal system including a heat accumulator which is capable of achieving acceleration of engine warm-up and an increase in heating performance in the passenger compartment meeting expectations at the start of the power unit with a simple heat medium circulation control.

### MEANS FOR SOLVING THE PROBLEMS

To accomplish the aforementioned first object, according to the present invention, a heat accumulator includes: a heat-insulating layer at the outer periphery of a liquid reserving portion, in which the liquid reserving portion and heat insulating layer are formed by stacking a plurality of tank constituting elements composed of plate members of an identical cross-sectional shape.

To accomplish the aforementioned second object, according to the present invention, a method of manufacturing a heat accumulator including a vacuum heat-insulating layer at the outer periphery of a liquid reserving portion includes: a part processing step of processing constituent parts constituting the heat accumulator; a temporary assembly step of assembling the processed constituent parts into a container; and a brazing step of evacuating the temporarily assembled container in a furnace and increasing temperature of the furnace to braze the constituent parts into a unit in vacuum atmosphere.

To achieve the aforementioned third object, according to the present invention, in a vehicle-mounted thermal system including a heat accumulator, the vehicle-mounted thermal system including: a vehicle-mounted heat source heating a heat medium while a power unit is being driven; a vehicle-mounted heat demand source requiring a hot heat medium when the power unit starts from a stopped state where temperature of the heat medium decreases; and a heat medium circuit connecting the vehicle-mounted heat source and the vehicle-mounted heat demand source, in which the heat medium circuit is provided with the heat accumulator whose inlet is connected to the vehicle-mounted heat source and whose outlet is connected to the vehicle-mounted heat demand source; the heat accumulator includes a heat storage layer between a liquid reserving portion and a heat-insulating layer; the heat storage layer being filled with a heat storage material absorbing and releasing heat along with its phase transition between liquid and solid phases; a circuit connecting the vehicle-mounted heat source and the inlet of the heat accumulator is provided with a first valve; a circuit connecting the vehicle-mounted heat demand source and the outlet of the heat accumulator is provided with a second valve; and the heat accumulator includes heat medium circulation control means which opens the first and second valves while the power unit is being driven, closes the first and second valves when the power unit stops, and opens the first and second valves when the power unit starts.

### EFFECTS OF THE INVENTION

According to the heat accumulator of the present invention, it is possible to satisfy the request to change the necessary capacity by only increasing or decreasing the number of the stacked tanks constituting elements composed of the plate members of an identical cross-sectional shape. Specifically, in the case of a heat accumulator having a structure composed of an inner and outer containers manufactured by drawing and the like, changing the necessary capacity of the heat accumulator requires replacing a drawing die or producing a new drawing die, thus leading to an increase in cost, a loss at manufacturing setup, or the like.
On the other hand, in the present invention, the heat accumulator has a stacking structure including the plurality of tank constituting elements stacked on each other. Accordingly, it is possible to immediately change the capacity from a certain capacity to a different capacity in the minimum unit equivalent to the capacity of the single tank constituting element if a plurality of tank constituting elements are prepared in advance. Accordingly, the request to change the necessary capacity is satisfied by increasing or decreasing the number of stacked tank constituting elements. Consequently, the request to change the necessary capacity is easily satisfied by only increasing or decreasing the number of stacked tank constituting elements without increasing the cost.

According to the method of manufacturing a heat capacity, in the part processing step, the constituent parts constituting the heat accumulator are processed, and in the temporary assembly step, the processed constituent parts are assembled into a container. In the brazing step, the temporarily assembled container is evacuated in a furnace and increase in temperature to braze the constituent parts into a unit in the vacuum atmosphere. The heat accumulator having a vacuum heat-insulating layer at the outer periphery of the liquid reserving portion is thus manufactured.
In this manner, in the brazing step, by controlling the vacuum atmosphere in the furnace into a stable vacuum atmosphere, compared to the case of evacuation in the air atmosphere under individual control, the vacuum heat-insulating layer having stable and unvarying vacuum quality can be formed.
Moreover, in the brazing process, fixation of the parts and evacuation can be both achieved. Accordingly, compared to the case of evacuating the vacuum heat-insulating layer in another process after fixing the parts by welding or the like, the processes can be simplified, and the manufacturing efforts and time can be reduced.
It is therefore possible to form the vacuum heat-insulating layer with unvarying and stable vacuum quality and reduce the manufacturing efforts and time by the simplification of the process.

Furthermore, according to the vehicle-mounted heat system including the heat accumulator of the present invention, while the power unit is driven, the first and second valves are opened by the heat medium circulation control means. Accordingly, when the heat storage material receives heat from the hot heat medium passing the heat accumulator from the inlet to the outlet and the temperature of the heat storage material reaches the melting point, the heat storage material changes the phase thereof from the solid to liquid phase and absorbs heat energy during the phase transition.
When the power unit stops, the first and second valves are closed by the heat medium circulation control means. The hot heat medium is then enclosed by the liquid reserving portion surrounded by the two layers of the heat-insulating layer and heat storage layer.
Furthermore, when the power unit starts, the first and second valves are opened by the heat medium circulation control means. The hot heat medium stored is fed to the vehicle-mounted heat demand source during the first cycle of the circulation cycles of the heat medium. Thereafter, the hot heat medium is affected by the temperature of the system environment and is mixed with cold heat medium. The temperature of the engine coolant within the heat accumulator therefore decreases. However, during and after the second cycle where the temperature of the heat storage material decreases to the freezing point because of the decrease in temperature of the heat medium, the heat storage material changes the phase thereof from the liquid to the solid phase. The heat stored in the heat storage material is released along with this phase transition. The decrease in temperature of the heat medium is prevented by the heat released from the heat storage material, and the heat medium kept hot is fed to the vehicle-mounted heat demand source.
Consequently, with such a simple heat medium circulation control, at the start of the power unit, it is possible to, for example, when the vehicle-mounted heat demand source is an engine, achieve expected warm-up promotion of the engine and, when the vehicle-mounted heat demand source is a heater core, achieve an expected increase in passenger compartment heating performance.

### BRIEF DESCRIPTION OF THE DRAWINGS

FIG. 1 is a vertical-sectional front view showing a heat accumulator of Embodiment 1 of the present invention.
FIG. 2 is an enlarged view of part A of FIG. 1 showing the heat accumulator of Embodiment 1.
FIG. 3 is an external perspective view showing the heat accumulator of Embodiment 1.
FIG. 4 is a sectional perspective view showing the heat accumulator of Embodiment 1.
FIG. 5 is an exploded perspective view showing the heat accumulator of Embodiment 1.
FIG. 6 is a process diagram showing vacuum brazing of a heat accumulator S1 of Embodiment 1.
FIG. 7 is a vertical-sectional front view showing a heat accumulator of Embodiment 2.
FIG. 8 is an enlarged view of part B of FIG. 7 showing the heat accumulator of Embodiment 2 of the present invention.
FIG. 9 is an external perspective view showing the heat accumulator of Embodiment 2.
FIG. 10 is a sectional perspective view showing the heat accumulator of Embodiment 2.
FIG. 11 is an exploded perspective view showing the heat accumulator of Embodiment 2.
FIG. 12 is a process diagram showing vacuum brazing of a heat accumulator S2 of Embodiment 2.
FIG. 13 is a view showing an air groove of the heat accumulator S2 of Embodiment 2, which is provided for increasing the degree of vacuum at a brazing step in a furnace.
FIG. 14 is an explanatory view showing a heat storage material encapsulation process in the vacuum brazing of the heat accumulator S2 of Embodiment 2.
FIG. 15 is an engine coolant circulation circuit diagram showing a first example of the engine coolant circulation system including the heat accumulator S2 of Embodiment 2.
FIG. 16 is an engine coolant circulation circuit diagram showing a second example of the engine coolant circulation system including the heat accumulator S2 of Embodiment 2.
FIG. 17 is a coolant circulation circuit diagram showing a first example of an electrical equipment coolant circulation system for a driving motor including the heat accumulator S2 of Embodiment 2.
FIG. 18 is a coolant circulation circuit diagram showing a second example of an electrical equipment coolant circulation system for a driving motor including the heat accumulator S2 of Embodiment 2.
FIG. 19 is a vertical-sectional front view showing a heat accumulator manufactured by a manufacturing method of Embodiment 3 of the present invention.
FIG. 20 is an enlarged view of part C of FIG. 19 showing the heat accumulator manufactured by the manufacturing method of Embodiment 3.
FIG. 21 is an external perspective view showing the heat accumulator manufactured by the manufacturing method of Embodiment 3.
FIG. 22 is a sectional perspective view showing the heat accumulator manufactured by the manufacturing method of Embodiment 3.
FIG. 23 is an exploded perspective view showing the heat accumulator manufactured by the manufacturing method of Embodiment. 3.
FIG. 24 is an operation explanatory view explaining a heat storing operation and a heat releasing operation in the heat accumulator of Embodiment 3.
FIG. 25 is an engine coolant temperature comparative characteristic diagram at the start of the engine for cases without, a heat accumulator, with a conventional heat accumulator, and with the heat accumulator of Embodiment 3.
FIG. 26 is an engine coolant circulation circuit diagram showing an engine coolant circulation system (an example of a vehicle-mounted thermal system) including the heat accumulator S of Embodiment 4 of the present invention.
FIG. 27 is an explanatory view of an engine coolant circulation operation in the engine coolant circulation system of Embodiment 4.
FIG. 28 is an engine coolant circulation circuit diagram showing an engine coolant circulation system (an example of the vehicle-mounted thermal system) including the heat accumulator S of Embodiment 5 of the present invention.
FIG. 29 is an explanatory view of an engine coolant circulation operation in the engine coolant circulation system of Embodiment 5.
FIG. 30 is a coolant circulation circuit diagram showing an electrical equipment coolant circulation system for a driving motor (an example of the vehicle-mounted thermal system) including the heat accumulator S of Embodiment 6 of the present invention.
FIG. 31 is an explanatory view of a coolant circulation operation in the electrical equipment coolant circulation system for a driving motor of Embodiment 6.
FIG. 32 is a coolant circulation circuit diagram showing an electrical equipment coolant circulation system for a driving motor (an example of the vehicle-mounted thermal system) including the heat accumulator S of Embodiment 7 of the present invention.
FIG. 33 is an explanatory view of a coolant circulation operation at the electrical equipment coolant circulation system for a driving motor of Embodiment 7.

### EXPLANATION OF REFERENCE SYMBOLS AND NUMERALS

S1: HEAT ACCUMULATOR
1: LIQUID RESERVING PORTION
2: VACUUM HEAT-INSULATING LAYER (HEAT-INSULATING LAYER)
6: INLET PIPE
7: OUTLET PIPE
8: INLET COVER PLATE
9: OUTLET COVER PLATE
10a: FIRST PARTITION WALL
10b: SECOND PARTITION WALL
10c: INNER RIB
10d: OUTER RIB
10e: HEAT-INSULATING LAYER SPACE
10f LIQUID RESERVING PORTION SPACE
10g: POSITIONING PROTRUSION
S2: HEAT ACCUMULATOR
2: SIDE VACUUM HEAT-INSULATING LAYER (HEAT-INSULATING LAYER)
3: INLET END VACUUM HEAT-INSULATING LAYER (HEAT-INSULATING LAYER)
4: OUTLET END VACUUM HEAT-INSULATING LAYER (HEAT-INSULATING LAYER)
15: INLET END PLATE
16: INLET COVER PLATE
17: OUTLET END PLATE
18: OUTLET COVER PLATE
19: TANK CONSTITUTING ELEMENT
19a: FIRST PARTITION WALL
19b: SECOND PARTITION WALL
19c: THIRD PARTITION PORTION
19d: INNER RIB
19e: OUTER RIB
19f: HEAT-INSULATING LAYER SPACE
19g: HEAT STORAGE LAYER SPACE
19h: LIQUID RESERVING PORTION SPACE
19i: POSITIONING PROTRUSION
19j: AIR GROOVE
20: CAP
21: ENGINE
22: HEATER CORE
23: FIRST VALVE
24: SECOND VALVE
25: RADIATOR
26: THERMO VALVE
27: CIRCULATION PUMP
28: CONTROLLER
29: PUMP
30: INVERTER COOLER
31: BATTERY COOLER
S3: HEAT ACCUMULATOR
38: FIRST CYLINDRICAL SIDE PLATE (CYLINDRICAL MEMBER)
39: FIRST INLET END PLATE (INLET PLATE MEMBER)
40: FIRST OUTLET END PLATE (OUTLET PLATE MEMBER)
41: SECOND CYLINDRICAL SIDE PLATE (CYLINDRICAL MEMBER)
42: SECOND INLET END PLATE (INLET PLATE MEMBER)
43: SECOND OUTLET END PLATE (OUTLET PLATE MEMBER)
44: ACCORDION CYLINDRICAL PLATE (CYLINDRICAL PLATE)

### BEST MODES FOR CARRYING OUT THE INVENTION

Hereinafter, a description is given of best modes for implementing a heat accumulator of the present invention based on Embodiments 1 to 7 shown in the drawings.

### EMBODIMENT 1

First, the constitution is described.

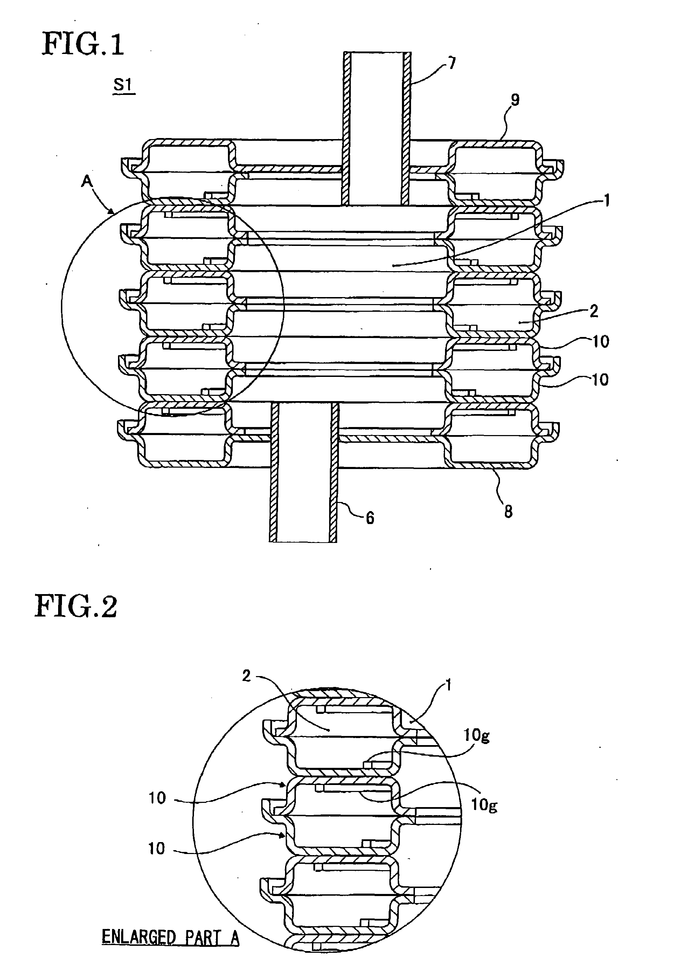

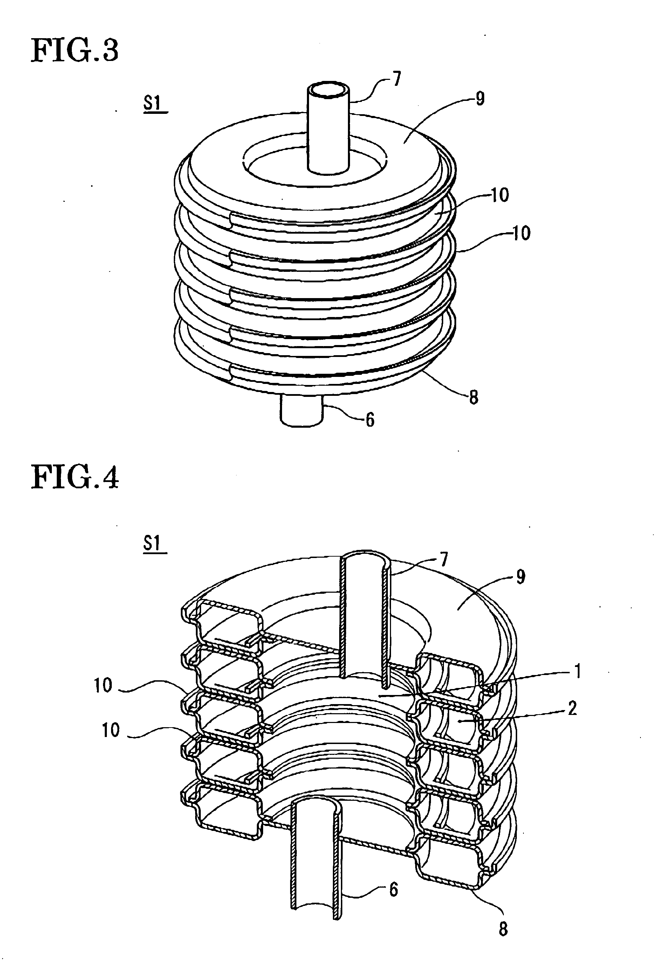

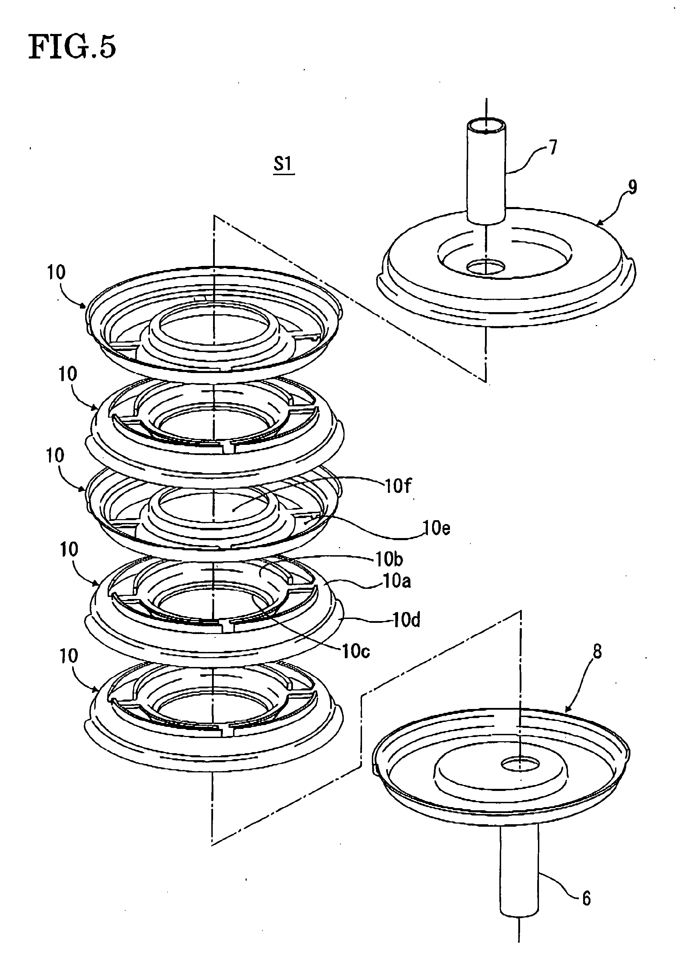

FIG. 1 is a vertical-sectional front view showing a heat accumulator of Embodiment 1; FIG. 2 is an enlarged view of part A of FIG. 1 showing the heat accumulator of Embodiment 1; FIG. 3 is an external perspective view showing the heat accumulator of Embodiment 1; FIG. 4 is a sectional perspective view showing the heat accumulator of Embodiment 1; and FIG. 5 is an exploded perspective view showing the heat accumulator of Embodiment 1.

As shown in FIGS. 1 to 5, a heat accumulator S1 of Embodiment 1 includes a liquid reserving portion 1, a vacuum heat-insulating layer (heat-insulating layer) 2, an inlet pipe 6, an outlet pipe 7, an inlet cover plate 8, an outlet cover plate 9, and tank constituting elements 10.

The heat accumulator S1 of Embodiment 1 includes the vacuum heat-insulating layer 2 at the outer periphery of the liquid reserving portion 1. The liquid reserving portion 1 and the vacuum heat-insulating layer 2 are formed by stacking the plurality of tank constituting elements 10 which are composed of plate members of an identical sectional shape.

The heat accumulator S1 of Embodiment 1 includes the inlet and the outlet cover plate 8 and 9 and the tank constituting elements 10 as constituent parts. The inlet pipe 6 is fixed to the inlet cover plate 8, and the outlet pipe 7 is fixed to the outlet cover plate 9.

As shown in FIG. 5, each of the tank constituting elements 10 of the heat accumulator S1 of Embodiment 1 includes a first partition wall 10a, a second partition wall 10b, an inner rib 10c, and an outer rib 10d coaxially arranged. The first and second partition walls 10a and 10b are radially joined at about four places of an entire circumference to form heat-insulating layer spaces 10e between the joint places. The space surrounded by the second partition wall 10b serves as a liquid reserving portion space 10f. The inner rib 10c protrudes from the second partition wall 10b towards the liquid reserving portion 1. The outer rib 10d protrudes outward from the first partition wall 10a and includes an axially bent portion at a part of the circumference for exterior shape alignment at the stacking. At the joint places between the first and second partition walls 10a and 10b, positioning protrusions 10g protruding in a tank axis direction are formed (see FIG. 2).

In the heat accumulator S1 of Embodiment 1, a plurality of the tank constituting elements 10 are stacked on each other, facing alternate directions, and the openings of the stacked tank constituting elements 10 at the both ends are closed by the inlet and outlet cover plates 8 and 9, thus constituting a container.

The liquid reserving portion 1 is composed of the liquid reserving portion spaces 10f made to communicate with each other by stacking the tank constituting elements 10.

The vacuum heat-insulating layer 2 is formed by evacuating the heat-insulating layer spaces 10 made to communicate with each other by stacking the tank constituting elements 10.

The method of manufacturing the heat insulator S1 of Embodiment 1 is a vacuum brazing as follows: Brazing filler metal is applied to the plurality of tank constituting elements 10, and the plurality of tank constituting elements 10 are stacked on each other. The openings of the stacked tank constituting elements 10 at both ends are closed by the inlet and outlet cover plates 8 and 9, temporarily assembling a container. The temporarily assembled container is evacuated in a furnace and then the temperature is increased.

Next, the operations thereof are described.

### [Manufacturing Method of Heat Accumulator]

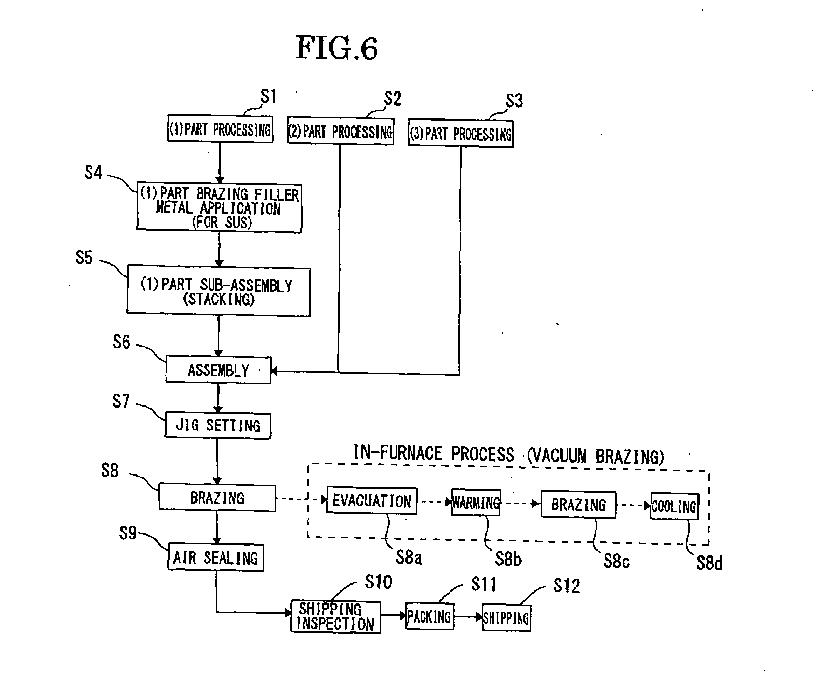

FIG. 6 is a process diagram showing vacuum brazing for the heat accumulator S1 of Embodiment 1. Hereinafter, the vacuum brazing for the heat accumulator S1 of Embodiment 1 is described using FIG. 6.

### ·Part processing process

In a first part processing process of step S1, the tank constituting elements 10 are processed by pressing or punching plate materials.
In a second part processing process of step S2, the inlet and outlet cover plates 8 and 9 are processed by pressing or punching plate materials.
In a third part processing process of step S3, the inlet and outlet pipes 6 and 7 are processed by pipe forming from plate materials, drawing, or the like.

### ·Brazing filler metal applying process

In a brazing filler metal applying process of step S4, brazing filler metal is applied to the plurality of tank constituting elements 10 (for example, stainless steel) processed at the first part processing process of the step S1.

### ·Part sub-assembly process (stacking process)

In a part sub-assembly process of step S5, a desired number of the tank constituting elements 10 with the brazing filler metal applied thereto in the brazing filler metal applying process of the step S4 are stacked according to the designed value of the liquid reserving capacity. In the case of Embodiment 1, the plurality of tank constituting elements 10 are stacked on each other facing alternate directions so as to provide a stack shown in FIGS. 1 to 5.

### ·Assembly process

In an assembly process of step 6, the stacked tank constituting elements 10 assembled in the part sub-assembly process of the step S5 are joined with the parts including the inlet and outlet cover plates 8 and 9 and inlet and outlet pipes 6 and 7, which are processed at the second and third part processing processes of the steps S2 and S3, as shown in FIG. 5, to be temporarily built into a container shape as a whole. At this time, the brazing filler metal is applied to the portions necessary to be brazed other than the stacked constituting elements 10.

### ·Jig setting process

In a jig setting process of step S7, the temporarily fabricated container is set to a brazing jig so that the individual parts temporarily fabricated into the container shape in the assembly process of the step S6 are not displaced and secure the unity thereof.

### ·Brazing process

In a brazing process of the step S8, the individual parts are fixed by vacuum brazing at the following in-furnace process.
The in-furnace process includes: an evacuation process to evacuate the inside of the furnace (step S8a); a warming process to increase temperature within the furnace (step S8b); a brazing process to fix the parts with melted brazing filler metal (step S8c); and a cooling process to cool the container fixed by brazing (step S8d).

### ·Air sealing process

In an air sealing process of step S9, the air tightness keeping the vacuum of the vacuum heat-insulating layer 2 of the brazed container taken out of the furnace is secured.

### ·Shipping inspection process

In a shipping inspection process of step S10, shipping inspection is made in terms of check items including whether the vacuum of the vacuum heat-insulating layer 2 is maintained with no brazing defects.

### ·Packing process

In a packing process of step S11, products which pass the shipping inspection are packed.

### ·Shipping process

In a shipping process of step S12, the packed products are shipped from a factory.

### [Heat Storing and Releasing Operation]

In the heat accumulator S1 of Embodiment 1, when a hot heat medium passing the liquid reserving portion 1 stops circulating, part of the hot heat medium is enclosed in the liquid reserving portion 1 surrounded by the vacuum heat-insulating layer 2. The heat medium stored in the liquid reserving portion 1 within the heat accumulator S1 is therefore prevented from cooling and is kept hot.
For using the hot heat medium within the liquid reserving portion 1 of the heat accumulator S1, the hot heat medium in the liquid reserving portion 1 is released through the outlet pipe 7. When the hot heat medium is configured to be released to the engine as hot engine coolant at the start of the engine, the engine warm-up can be accelerated. When the hot heat medium is configured to be released to the heater core at the start of the engine, the heating performance in the passenger compartment can be increased.

### [Operation of responding to change in necessary capacity]

In the heat accumulator S1 of Embodiment 1, the liquid reserving portion 1 and vacuum heat-insulating layer 2 are formed by stacking the plurality of tank constituting elements 10 composed of the plate members of an identical cross-sectional shape.
Accordingly, the request to change the necessary capacity can be satisfied by increasing or decreasing the number of the stacked tank constituting elements 10 composed of the plate members of an identical cross-sectional shape.
Specifically, in the case of a heat accumulator having a structure composed of an inner and outer containers manufactured by drawing and the like as the conventional art, changing the necessary capacity of the heat accumulator requires replacing the drawing die or producing a new drawing die, thus leading to an increase in cost, a loss at manufacturing setup, or the like.
On the other hand, in Embodiment 1, the heat accumulator S1 has a stacking structure including the plurality of tank constituting elements 10 stacked on each other. Accordingly, the request to change the necessary capacity is satisfied by increasing or decreasing the number of stacked tank constituting elements 10, and the change of the drawing die, which increases the cost, is not necessary.
In other words, in the case of Embodiment 1, it is possible to immediately produce a heat accumulator with a different capacity if a plurality of the tank constituting elements 10 are prepared in advance. When there is a request to increase the necessary capacity with respect to a heat accumulator with a certain capacity, the number of tank constituting elements 10 stacked is increased. When there is a request to reduce the necessary capacity, the number of tank constituting elements 10 stacked is reduced. Herein, the capacity can be changed in units equivalent to the capacity of the single tank constituting element 10.

Next, the effects thereof are described.
According to the heat accumulator S1 of Embodiment 1, the effects enumerated in the following can be obtained.
(1) In the heat accumulator including the vacuum heat-insulating layer 2 in the outer periphery of the liquid reserving portion 1, the liquid reserving portion 1 and vacuum heat-insulating layer 2 are formed by stacking the plurality of tank constituting elements 10 composed of the plate members of an identical cross-sectional shape. It is therefore possible to easily satisfy the request to change the necessary capacity without increasing the cost by just increasing or decreasing the number of stacked tank constituting elements.

(2) The heat accumulator S1 includes the inlet and outlet cover plates 8 and 9 and tank constituting elements 10 as the constituent parts. The inlet pipe 6 is fixed to the inlet covcr plate 8, and the outlet pipe 7 is fixed to the outlet cover plate 9. Each of the tank constituting elements 10 includes the first and second partition walls 10a and 10b coaxially arranged. Between the first and second partition walls 10a and 10b, the heat-insulating layer space 10e is formed. The liquid reserving portion space 10f is surrounded by the second partition wall 10b. The plurality of tank constituting elements 10 are stacked, and the openings of the stacked tank constituting elements 10 at the both ends are closed by the inlet and outlet cover plates 8 and 9, thus constituting the container. The liquid reserving portion 1 is composed of the liquid reserving portion spaces 10f, which are made to communicate with each other by stacking the tank constituting elements 10, and the vacuum heat-insulating layer 2 is composed of evacuating the heat-insulating layer spaces 10e, which are made to communicate with each other by stacking the tank constituting elements 10. It is therefore possible to provide the stacking-type heat accumulator S1 which includes the vacuum heat-insulating layer 2 at the outer periphery of the liquid reserving portion 1 and has high responsiveness to the request to change the necessary capacity.

(3) The heat accumulator S1 is manufactured as follows: The plurality of tank constituting elements 10 are stacked on each other with the brazing filler metal applied thereto, and the openings of the stacked tank constituting elements 10 at the both ends are closed with the inlet and outlet cover plates 8 and 9 to be temporarily assembled. The temporarily assembled container is subjected to vacuum brazing, which evacuates the temporarily assembled container within the furnace and then increases the temperature thereof. In other words, fixation of the parts and evacuation are both performed at the vacuum brazing process. Accordingly, compared to the case where the parts are fixed by welding, brazing, or the like and then the vacuum heat-insulating layer is evacuated at a different process, it is possible to reduce the variations in degree of vacuum of the vacuum heat-insulating layer 2 and to shorten the manufacturing time by the simplified process.

According to the method of manufacturing the heat accumulator S1 of Embodiment 1, the effects enumerated below can be obtained.
(1) The method of manufacturing the heat accumulator S1 including the vacuum heat-insulating layer 2 at the outer periphery of the liquid reserving portion 1 includes: the part processing processes to process the constituent parts constituting the heat accumulator S1 (steps S1 to S3); the temporary assembly process to assemble the processed constituent parts into a container form (step S4 to S6); and the brazing process to evacuate the temporarily assembled container within the furnace and then increase the temperature thereof for brazing the constituent parts into a unit in the vacuum atmosphere. Accordingly, it is possible to form the vacuum heat-insulating layer 2 with unvarying and stable vacuum quality and to reduce the manufacturing efforts and time by the simplified process.

(2) The heat accumulator S1 includes the vacuum heat-insulating layer 2 at the outer periphery of the liquid reserving portion 1. In the part processing processes (steps S1 to S3), the tank constituting elements 10, which are composed of plate members having a same cross-sectional shape and each of which includes the liquid reserving portion space 10f and vacuum heat-insulating space 10e, and the inlet and outlet cover plates 8 and 9 are processed. In the temporary assembly process (steps S4 to S6), the plurality of tank constituting elements 10 are stacked, and the openings of the stacked tank constituting elements 10 are closed with the inlet and outlet cover plates 8 and 9, thus forming the liquid reserving portion 1 and vacuum heat-insulating layer 2. It is therefore possible to provide the method of manufacturing the stacking-type heat accumulator S1 which includes the vacuum heat-insulating layer 2 at the outer periphery of the liquid reserving portion 1 and has responsiveness to the request to change the necessary capacity.

(3) The temporary assembly process includes the brazing material application process to apply the brazing filler metal to the tank constituting elements 10 (step S4); the sub-assembly process to stack the tank constituting elements 10 with the brazing filler metal applied thereto (step S5); and the assembly process to close the openings of the stacked tank constituting elements 10 with the inlet and outlet cover plates 8 and 9 for fabrication into a container form (step S6). Accordingly, employment of the sub-assembly process to stack the tank constituting elements 10 with the brazing filler material applied thereto allows the plurality of stacked tank constituting elements 10 to be reliably brazed and fixed in the brazing process (step S8).

### EMBODIMENT 2

Embodiment 2 is a heat accumulator including a liquid reserving portion, a vacuum heat-insulating layer, and a heat storage layer while Embodiment 1 is the heat accumulator including the liquid reserving portion and the vacuum heat-insulating layer.

First, the constitution thereof is described.

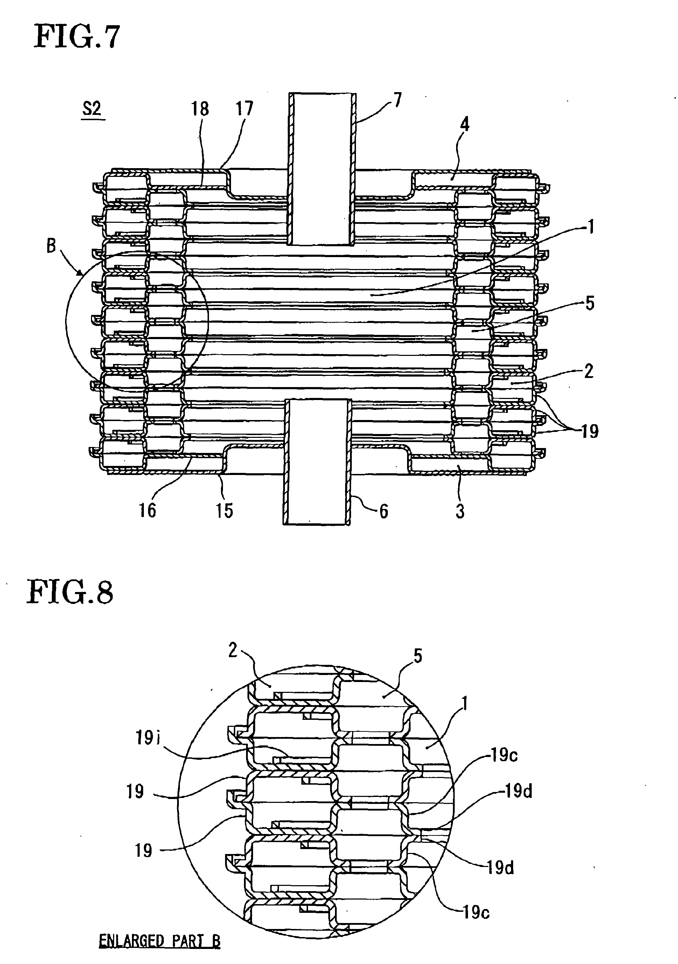

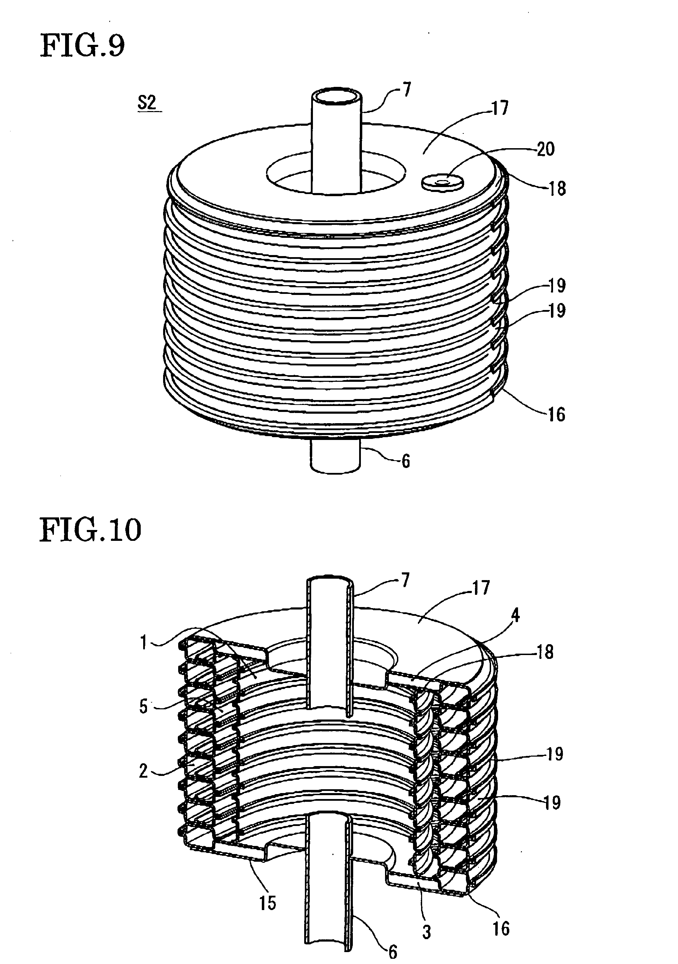

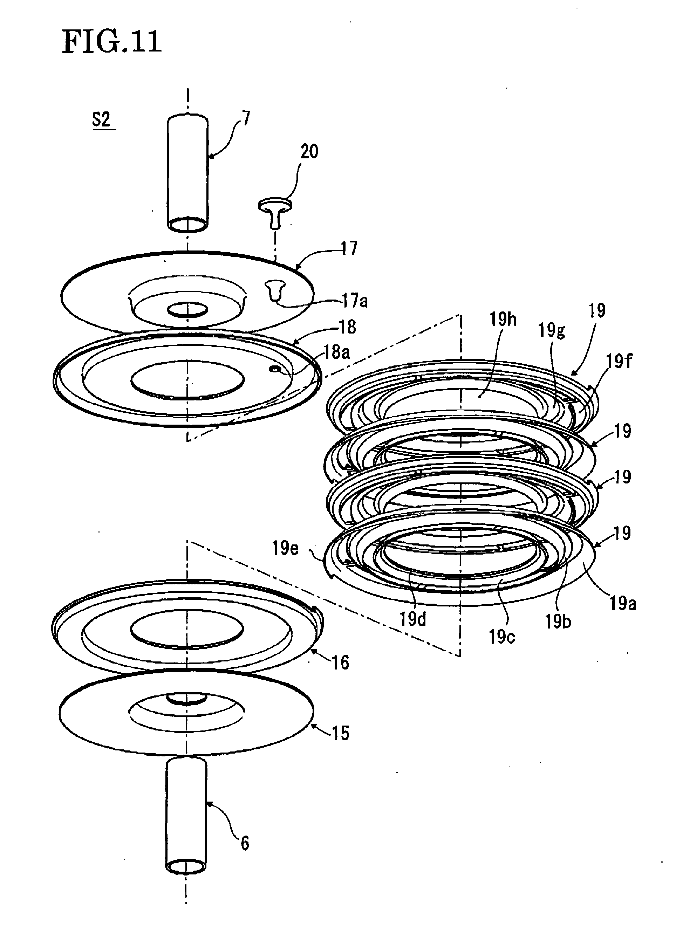

FIG. 7 is a vertical-sectional front view showing a heat accumulator of Embodiment 2; FIG. 8, an enlarged view of part B of FIG. 7 showing the heat accumulator of Embodiment 2; FIG. 9, an external perspective view showing the heat accumulator of Embodiment 2; FIG. 10, a sectional perspective view showing the heat accumulator of Embodiment 2; and FIG. 11, an exploded perspective view showing the heat accumulator of Embodiment 2.

As shown in FIGS. 7 to 11, a heat accumulator S2 of Embodiment 2 includes a liquid reserving portion 1, a side vacuum heat-insulating layer (heat-insulating layer) 2, an inlet end vacuum heat-insulating layer 3 (heat-insulating layer), an outlet end vacuum heat-insulating layer 4 (heat-insulating layer), a heat storage layer 5, an inlet pipe 6, an outlet pipe 7, an inlet end plate 15, an inlet cover plate 16, an outlet end plate 17, an outlet cover plate 18, and tank constituting elements 19.

The heat accumulator S2 of Embodiment 2 includes the vacuum heat-insulating layers 2, 3, and 4 at the outer periphery of the liquid reserving portion 1. Between the liquid reserving portion 1 and side vacuum heat-insulating layer 2, the heat storage layer 5 is provided, which is filled with a heat storage material absorbing or releasing heat during phase transition between liquid and solid phases.

The heat accumulator S2 of Embodiment 2 includes the inlet and outlet end plates 15 and 17, the inlet and outlet cover plates 16 and 18, and the tank constituting elements 19 as constituent parts. The inlet pipe 6 is fixed to the inlet end plate 15, and the outlet pipe 7 is fixed to the outlet end plate 17.

Furthermore, as shown in FIG. 8, on a third partition wall 19c separating a liquid reserving portion space 19h of each tank constituting element 19, an inner rib 19d protruding in a direction orthogonal to the flow of the heat medium from the inlet to the outlet is formed. As shown in FIG. 8, the adjacent third partition walls 19c and 19c and the adjacent inner ribs 19d and 19d abut on each other to form protrusions orthogonal to the flow.

The heat storage material encapsulated in the heat storage layer 5 is a paraffin material as a latent heat storage material. The paraffin raw material stores heat of fusion during phase transition from the solid to the liquid phase in a temperature range not lower than the melting point and releases heat of solidification during phase transition from the solid to the liquid phase in a temperature range not higher than the freezing point. The heat storage material is paraffin capsules, which include the paraffin material encapsulated in spherical coatings as microcapsules. The heat storage layer 5 is filled with aggregates of the paraffin capsules taking an account of a change in volume (about 10%) accompanied with the phase transition between the liquid and solid phases.
Herein, the reason for using the paraffin material as the heat storage material is that the phase transition temperature including the melting point (melting temperature) and freezing point (freezing temperature) can be set in a wide range of temperature (-50 to 80°C) depending on the number of carbon chains and moreover that the amount of stored heat (latent heat of fusion) thereof is about 130 to 250 kJ/kg, which is higher than those of the other materials.
For example, in the case of using the heat accumulator in a vehicle-mounted thermal system circulating engine coolant to the heater core, the phase transition temperature is preferably about 50 to 60°C or more. The reason therefor is that the temperature of the engine coolant does not always reach 80°C in winter or some cases. Moreover, the air outlet temperature feeling warm is 30°C, and the phase transition temperature required to provide an air outlet temperature of not lower than 30°C is about 50 to 60°C or more as described above.

In the case of manufacturing the heat accumulator S2 of Embodiment 2 by vacuum brazing, as shown in FIG. 11, the outlet end plate 17 of the heat accumulator S2 is provided with a heat storage material encapsulation port 17a for encapsulating the heat storage material, which is protruded towards the outlet cover plate 18. In the outlet cover plate 18, an encapsulation port hole 18a penetrating the heat storage material encapsulation port 17a is formed. The heat storage material encapsulation port 17a is closed by a cap 20 made of resin, rubber, or the like after the heat storage material is encapsulated.

Each tank constituting element 19 includes first and second partition walls 19a and 19b, the third partition wall 19c, the inner rib 19d, and an outer rib 19e arranged coaxially. The first and second partition walls 19a and 19b are radially joined at about four places of the entire circumference to form heat-insulating layer spaces 19f between the joint places. The second and third partition walls 19b and 19c are radially joined at about four places of the entire circumference to form heat storage layer spaces 19g between the joint places. The space surrounded by the third partition wall 19c servers as a liquid reserving portion space 19h. The inner rib 19d protrudes from the third partition wall 19c towards the liquid reserving portion 1. The outer rib 19e protrudes outward from the first partition wall 19a and includes an axially bent portion at a part of the circumference for exterior shape alignment for stacking. At the joint places between the first and second partition walls 19a and 19b, positioning protrusions 19i protruding in a tank axis direction are formed (see FIG. 8).

In the heat accumulator S2 of Embodiment 2, a plurality of the tank constituting elements 19 are stacked facing in alternate directions, and the openings of the stacked tank constituting elements 19 at the both ends are closed by the inlet end and cover plates 15 and 16 and the outlet end and cover plates 17 and 18 to constitute a container.

The liquid reserving portion 1 is composed of the liquid reserving portion spaces 19h made to communicate with each other by stacking the tank constituting elements 19.
The vacuum heat-insulating layer 2 is formed by evacuating the heat-insulating layer spaces 19f made to communicate with each other by stacking the tank constituting elements 19. The inlet end vacuum heat-insulating layer 3 is formed by evacuating the space formed by the inlet end and cover plates 15 and 16. The outlet end vacuum heat-insulating layer 4 is formed by evacuating the space formed by the inlet end and cover plates 17 and 18.
The heat storage layer 5 is composed of the heat storage layer spaces 19g made to communicate by stacking the tank constituting elements 19.

The heat insulator S2 of Embodiment 2 is manufactured by a manufacturing method as follows: Brazing filler metal is applied to the plurality of tank constituting elements 19, and the plurality of tank constituting elements 19 are stacked. The openings of the stacked tank constituting elements 19 at both ends are closed by the inlet and outlet cover plates 16 and 18, temporarily assembling a container. The temporarily assembled container is evacuated in a furnace and then the temperature is increased for vacuum brazing, thus evacuating the vacuum heat-insulating layers 2, 3, and 4 and heat storage layer 5 together. Thereafter, the evacuated heat storage layer 5 is filled with the heat storage material by vacuum suction.

Next, operations thereof are described.

### [Manufacturing Method of Heat Accumulator]

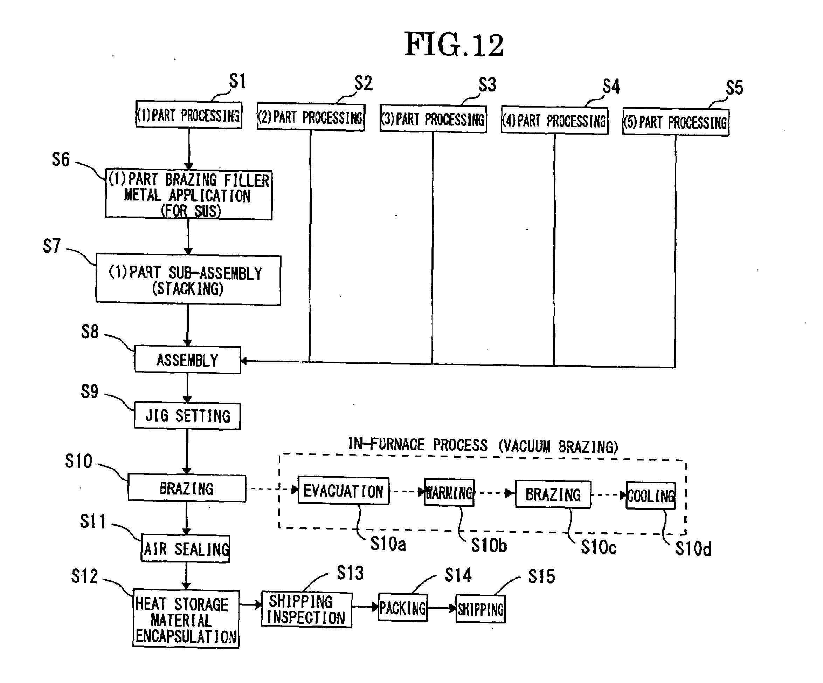

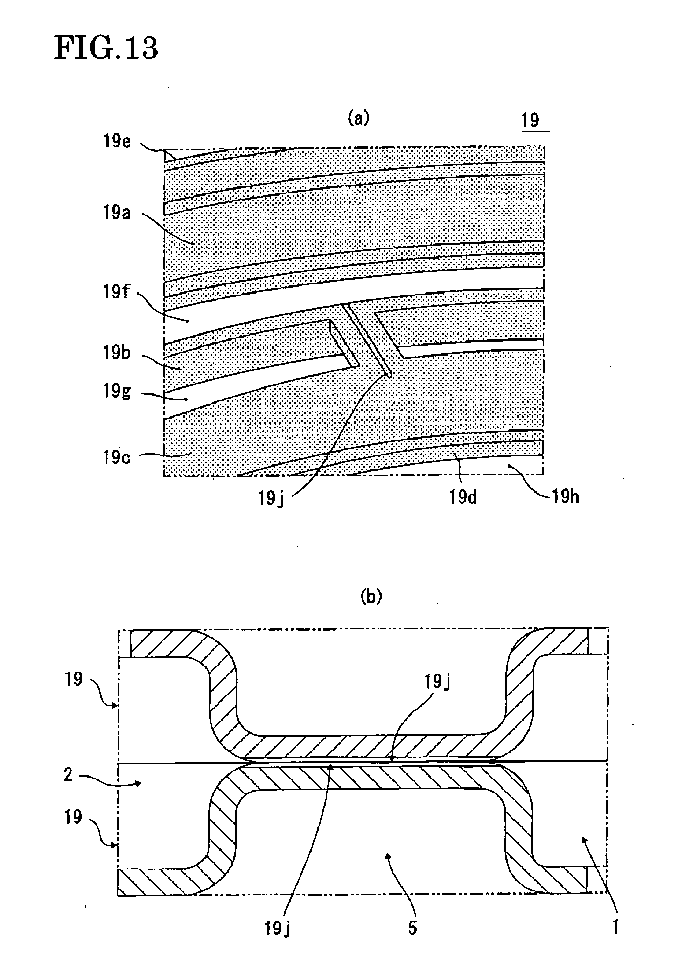

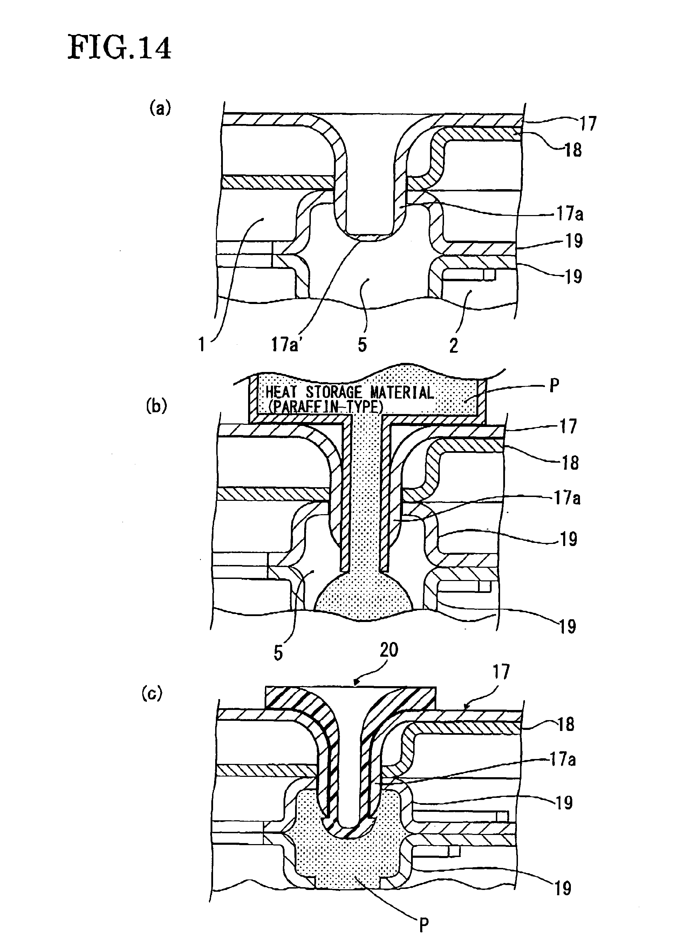

FIG. 12 is a process diagram showing vacuum brazing of the heat accumulator S2 of Embodiment 2; FIG. 13 is a view showing an air groove of the heat accumulator S2 of Embodiment 2, which is provided for increasing the degree of vacuum at a brazing process in the furnace; and FIG. 14 is an explanatory view showing a heat storage material encapsulation process at the vacuum brazing of the heat accumulator S2 of Embodiment 2. Hereinafter, the vacuum brazing for the heat accumulator S2 of Embodiment 2 is described using FIGS. 12 to 14.

### ·Part processing process

In a first part processing process of step S1, the tank constituting elements 19 are processed by pressing or punching plate materials.
In a second part processing process of step S2, the inlet and outlet cover plates 16 and 18 are processed by pressing or punching plate materials.
In a third part processing process of step S3, the inlet and outlet end plates 15 and 17 are processed by pressing or punching plate materials.
In a fourth part processing process of step S4, the inlet and outlet pipes 6 and 7 are processed by pipe forming of plate materials.
In a fifth part processing process of step S5, the cap 20 is formed by pressing or punching a plate material, drawing, or the like.

### ·Brazing filler metal applying process

In a brazing filler metal applying process of step S6, brazing filler metal is applied to the plurality of tank constituting elements 19 (for example, stainless steel) processed at the first part processing process of the step S1.

### ·Part sub-assembly process (stacking process)

In a part sub-assembly process of step S7, a desired number of the tank constituting elements 19 with the brazing filler metal applied thereto at the brazing filler metal applying process of the step S6 are stacked according to the designed value of the liquid storage capacity. In the case of Embodiment 2, the plurality of tank constituting elements 19 are stacked facing in alternate directions so as to provide a stack shown in FIGS. 7 to 11.

### ·Assembly process

In an assembly process of step 8, the stacked tank constituting elements 19 assembled in the part sub-assembly process of the step S7 are joined with the parts processed at the second to fifth part processing processes, including the inlet and outlet cover plates 16 and 18, the inlet and outlet end plates 15 and 17, the inlet and outlet pipes 6 and 7, and the cap 20, to be temporarily built into a container shape as a whole. At this time, the brazing filler metal is applied to the portions necessary to be brazed other than the stacked constituting elements 19.

### ·Jig setting process

In a jig setting process of step S9, the temporarily built-up container is set to a brazing jig so that the individual parts temporarily built into the container shape in the assembly process of the step S8 are not displaced and secure the unity thereof.

### ·Brazing process

In a brazing process of the step S10, the individual parts are fixed by vacuum brazing at the following in-furnace process.
The in-furnace process includes: an evacuation process to evacuate the inside of the furnace (step S10a); a warming process to increase temperature within the furnace (step S10b); a brazing process to fix the parts with melted brazing filter metal (step S10c); and a cooling process to cool the container fixed by brazing (step S10d)
In the evacuation process of the step S10a, in order to further increase the degree of vacuum, as shown in FIG. 13(a), air grooves 19j are formed at the joint places radially connecting the second and third partition walls 19b and 19c. Accordingly, in the stacked tank constituting elements 19, as shown in FIG. 13(b), the liquid reserving portion 1 and side vacuum heat-insulating layer 2 communicate with each other through the pairs of air grooves 19j and 19j facing each other.

### ·Air sealing process

In an air sealing process of step S11, the air tightness keeping the vacuum of the vacuum heat-insulating layers 2 to 4 and heat storage layer 5 of the brazed container taken out of the furnace is secured.

### ·Heat storage material encapsulation process

In a heat storage material encapsulation process of step S12, the heat storage material is encapsulated using evacuation by the evacuated heat storage layer 5.
Specifically, as shown in FIG. 14(a), in the case of vacuum brazing, the heat storage layer 5 is also evacuated. Moreover, in the heat storage encapsulation port 17a formed at the outlet end plate 17, a thin wall portion 17a' made thinner than a standard plate thickness is formed.
As shown in FIG. 14(b), when the tip end of a filler charged with a heat storage material P (paraffin) is inserted into the heat storage material encapsulation port 17a to break through the thin wall portion 17a', the heat storage material P is sucked at once into the heat storage layer 5 by vacuum suction force of the heat storage layer 5. Since the heat storage layer 5 is evacuated, the heat storage material is uniformly encapsulated within a short time. After the heat storage layer 5 is filled with the heat storage material P, the cap 20 is inserted and engaged as shown in FIG. 14(c) to close the broken heat storage material encapsulation port 17a.

### ·Shipping inspection process

In a shipping inspection process of step S13, shipping inspection is performed in terms of check items including whether the vacuum of the vacuum heat-insulating layer 2 is maintained with no brazing defects and whether the heat storage layer 5 is filled with the heat storage material P.

### ·Packing process

In a packing process of step S14, products which pass the shipping inspection are packed.

### ·Shipping process

In a shipping process of step S15, the packed products are shipped from a factory.

### [Heat Storing and Releasing Operation]

A description is given of heat storing and releasing operations by the heat accumulator 2 of Embodiment 2.
With regard to the heat absorbing operation of the heat storage material, while hot heat medium circulates through the liquid reserving portion 1 within the heat accumulator 2 by a flow from the inlet pipe 6 to the outlet pipe 7, the heat storage material within the heat storage layer 5 receives heat from the hot heat medium through the third partition walls 19c including the inner ribs 19d. Upon receiving the heat, the heat storage material increases in temperature. When the temperature of the heat storage material reaches the melting point thereof, the heat storage material changes the phase thereof from the solid to the liquid phase and absorbs heat energy along with this phase transition.
In Embodiment 2, the heat storage material is paraffin capsules. Accordingly, when the temperature of the heat storage material is low as less than the melting point, the encapsulated paraffin is solid like wax. On the other hand, when the temperature of the heat storage material reaches the melting point or more, solid paraffin gradually liquefies and becomes completely liquid within the capsules when the heat storage material absorbs heat at maximum.

With regard to the operation of storing heat in the heat medium within the liquid reserving portion 1, when a hot heat medium passing the liquid reserving portion 1 stops circulating, part of the hot heat medium is enclosed in the liquid reserving portion 1 surrounded by two layers of each of the vacuum heat-insulating layers 2 to 4 and heat storage layer 5 and is prevented from decreasing in temperature. The heat medium stored in the liquid reserving portion 1 within the heat accumulator S2 is kept hot.
In other words, even if the circulation of the hot medium is stopped for a long time and the outside temperature around the heat accumulator S2 becomes low, the double heat-insulating structure by the vacuum heat-insulating layers 2 to 4 and heat storage layer 5 minimizes the heat energy escaping from the heat medium stored in the liquid reserving portion 1. It is therefore possible to achieve so high heat retention of the heat accumulator S2 that the heat medium of the liquid reserving portion 1 is kept hot even after a long period of time.

With regard to the operation of releasing the hot heat medium, in the case of using the hot heat medium within the liquid reserving portion 1 of the heat accumulator S2, first the hot heat medium of the liquid reserving portion 1 is released through the outlet pipe 7. Along with the release of the hot heat medium, a cold heat medium is introduced into the liquid reserving portion 1 of the heat accumulator 2 through the inlet pipe 6 and is mixed with the hot heat medium. Accordingly, the temperature of the heat medium within the reservoir 1 of the heat accumulator S2 is lowered.

With regard to the operation of releasing heat from the heat storage material, when the heat medium within the liquid reserving portion 1 of the heat accumulator S2 decreases in temperature and draws heat from the heat storage material within the heat storage layer 5 through the third partition walls 19c including the inner ribs 19d, the temperature of the heat storage material is lowered. When the temperature of the heat storage material then reaches the freezing point, the phase of the heat storage material changes from the liquid to the solid phase. Along with this phase transition, the heat storage material releases the absorbed heat and continues to supply the heat energy due to the latent heat to the heat medium through the third partition walls 19c including the inner ribs 19d, thus preventing the temperature of the heat medium from being lowered.
In Embodiment 2, the heat storage material is paraffin capsules. Accordingly, when the temperature of the heat storage material is higher than the freezing point, the encapsulated paraffin is liquid. On the other hand, when the temperature of the heat storage material is reduced to the freezing point or less, liquid paraffin gradually solidifies to release heat and becomes solid within the capsules when the heat storage material releases heat at maximum.

As described above, the heat accumulator 2 of Embodiment 2 effectively utilizes "sensible heat" stored in the heat medium with the heat retention maintained and "latent heat" released from the heat storage material of the heat storage layer 5.
Accordingly, in an application of the heat accumulator 2 to the engine coolant circulation circuit, introducing hot engine coolant to the engine side at the start of the engine can considerably reduces time taken for the engine to reach the engine warm-up temperature. Moreover, in another application thereof to the engine coolant circulation circuit, introducing the hot engine coolant to the heater core side at the start of the engine can increased the passenger compartment heating performance.
The "sensible heat" is heat energy stored without phase transition, and "latent heat" is heat energy absorbed or released during phase transitions between the solid and liquid phases. The amount of heat stored in the form of "latent heat" is several orders of magnitude higher than that of "sensible heat."

### [Heat Exchange Promotion Operation]

The heat accumulator S2 of Embodiment 2 includes the inlet end and cover plates 15 and 16, the outlet end and cover plates 17 and 18, and the tank constituting elements 19, and the inlet and outlet pipes 6 and 7 are fixed to the inlet and outlet end plates 15 and 17, respectively. On the third partition walls 19c separating the liquid reserving portion spaces 19h of the tank constituting elements 19, the inner ribs 19d protruding in the direction orthogonal to the flow of the heat medium from the inlet to the outlet are formed.

Accordingly, the flow of the heat medium from the inlet pipe 6 to the outlet pipe 7 meanders along the protrusions and recesses composed of the third partition walls 19c and inner ribs 19d. When the heat storage material encapsulated in the heat storage layer 5 absorbs heat from the heat medium, the effective area for heat absorption is larger than that in the case of a straight cylindrical pipe, providing high heat absorption efficiency, In a similar way, when the heat storage material encapsulated in the heat storage layer 5 releases heat to the heat medium, the effective area for heat release is larger than that in the case of the straight cylindrical pipe, thus resulting in high heat release efficiency. The protrusions and recesses composed of the third partition walls 19c and inner ribs 19d can thus promote the heat exchange efficiency.

### [Application Example of Heat Accumulator S2 to Engine Coolant Circulation System]

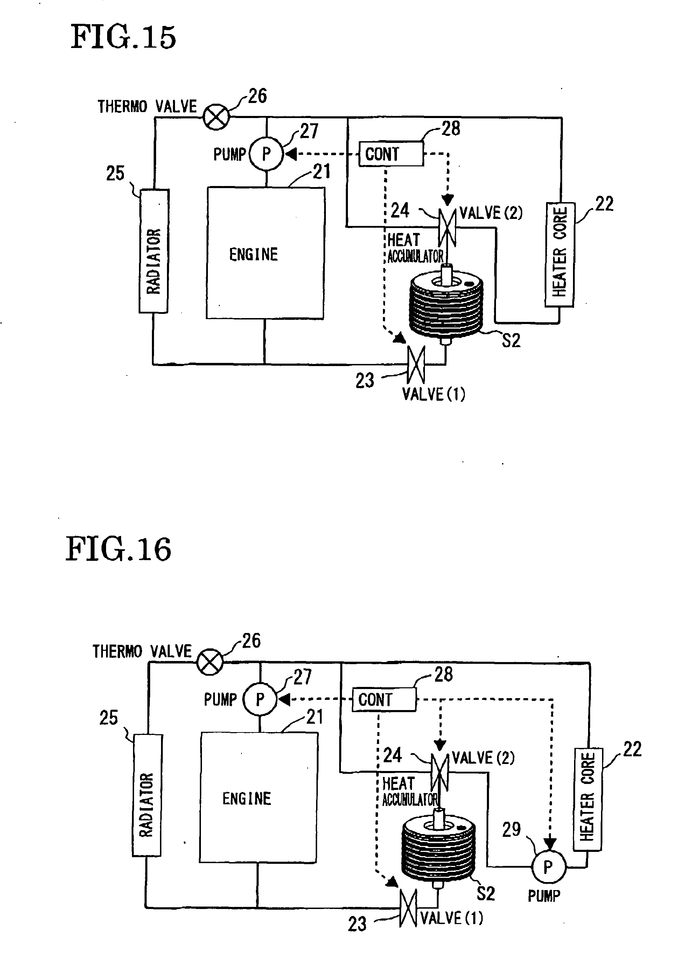

FIG. 15 is an engine coolant circulation circuit diagram showing a first example of an engine coolant circulation system including the heat accumulator S2 of Embodiment 2.

An engine 21 heating engine coolant while being driven and the engine 21 and a heater core 22 which require the heated engine coolant when the engine is started from the engine stop state, where the temperature of the engine coolant decreases, are connected through an engine coolant circulation circuit.
The engine coolant circulation circuit is provided with the heat accumulator S2 whose inlet side is connected to the engine 21 and whose outlet side is connected to the engine 21 and heater core 22.

The circuit connecting the engine 21 and the inlet side of the heat accumulator S2 is provided with a first valve 23, and the circuit connecting the outlet side of the heat accumulator S2 and the engine 21 and heater core 22 is provided with a second valve 24. The engine coolant circulation circuit connecting the engine 21 and a radiator 25 is provided with a thermo valve 26 and a circulation pump 27.

Operations of the first and second valves 23 and 24 and the circulation pump 27 are controlled by a controller 28.
The controller 28 makes control as follows: the controller 28 opens the first and second valves 23 and 24 while the engine 21 is being driven and closes the first and second valves 23 and 24 when the engine 21 is stopped. At the start of the engine 21, the controller 28 opens the second valve 24 to the engine 21 side when the engine warm-up has priority, and opens the second valve 24 to the heater core 22 side when the passenger compartment heating has priority.

Accordingly, at the start of the engine, by continuing to feed hot engine coolant from the heat accumulator S2 utilizing "sensible heat" and "latent heat," expected promotion of warm-up of the engine 2 can be achieved when the engine warm-up has priority while an expected increase in heating performance in the passenger compartment can be achieved when the passenger compartment heating has priority.

FIG. 16 is an engine coolant circulation circuit diagram showing a second example of the engine coolant circulation system including the heat accumulator S2 of Embodiment 2.
This second example is an example of further providing a pump 29 for the circuit connecting the second valve 24 and the heater core 22 in the engine coolant circulation system shown in FIG. 15.
Accordingly, in addition to the effects of the first example, the second example further provides an effect on controlling the heating performance by regulating the flow rate when the passenger compartment heating has priority.

### [Application Example of Heat Accumulator S2 to Electrical Part Coolant Circulation System for Driving Motor]

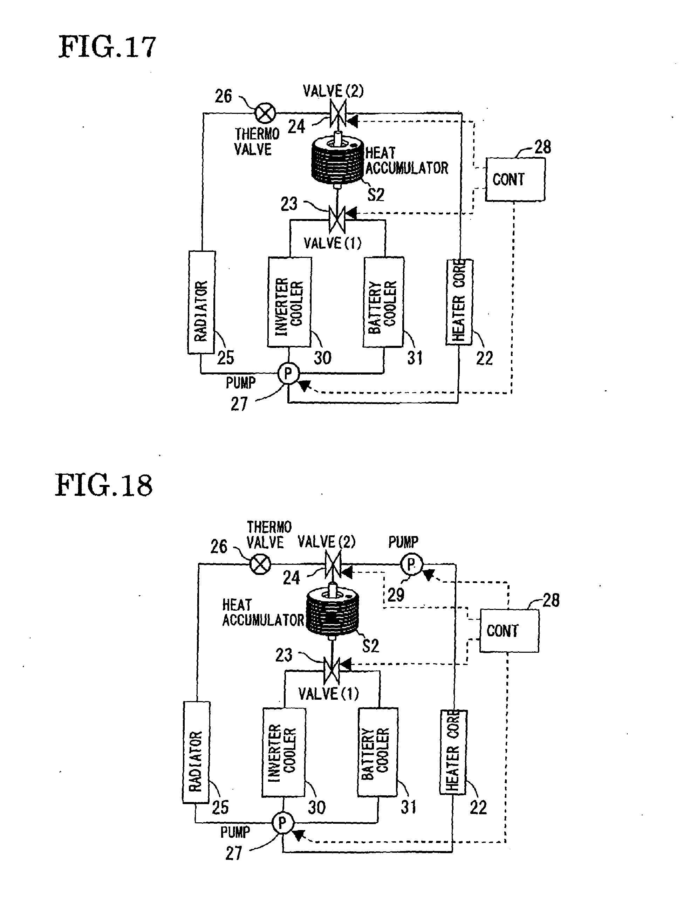

FIG. 17 is a coolant circulation circuit diagram showing a first example of an electrical equipment coolant circulation system for a driving motor including the heat accumulator S2 of Embodiment 2.
In this first example, a vehicle-mounted heat source includes an inverter cooler 30 which heats inverter coolant while being driven and a battery cooler 31 which heats battery coolant while being driven. A vehicle-mounted heat demand source includes a heater core 22 of an air conditioner using the inverter coolant and battery coolant as heating medium.
The controller 28 makes control at the start of the engine to open the first valve 23 provided on the inlet side of the heat accumulator S1 and the second valve 24 provided on the outlet side of the heat, accumulator S2. Accordingly, it is possible to achieve an expected increase in passenger compartment heating performance at the start of the engine in a hybrid vehicle.

FIG. 18 is a coolant circulation circuit diagram showing a second example of the electrical equipment coolant circulation system for a driving motor including the heat accumulator S2 of Embodiment 2.
This second example is an example further providing the pump 29 for the circuit connecting the second valve 24 and the heater core 22 in the electrical equipment coolant circulation system for a driving motor shown FIG. 17.
Accordingly, in addition to the effects of the first example, the second example further provides an effect on controlling the heating performance by regulating the flow rate at the start of the engine.

Next, effects thereof arc described.
In addition to the effect (1) in the heat accumulator S1 of Embodiment 1, the heat accumulator S2 of Embodiment 2 can provide the effects enumerated below.
(4) The heat storage layer 5 filled with the heat storage material absorbing and releasing heat during phase transition between liquid and solid phases is provided between the liquid reserving portion 1 and each of the vacuum heat-insulating layers 2, 3, and 4. Accordingly, it is possible to provide the heat accumulator S2 having so high heat storage performance that can increase the warm-up performance or passenger compartment heating performance at the start of the engine because of "latent heat" released from the heat storage material in the heat storage layer 5.

(5) The heat storage material is a paraffin material, as a latent heat storage material, which stores the heat of fusion during phase transition from the solid to the liquid phase in the temperature range not lower than the melting point and which releases the heat of solidification during phase transition from the liquid to the solid phase in the temperature range not higher than the freezing point. Accordingly, it is possible to obtain a high storage of heat even with a little amount of the heat storage material. Moreover, the paraffin material has high flexibility in setting the phase transition temperature, and accordingly, the phase transition temperature can be properly set depending on the intended use.

(6) The heat storage material includes paraffin capsules, which include the paraffin material encapsulated in spherical coatings as microcapsules. The heat storage layer 5 is filled with aggregates of the paraffin capsules taking an account of a change in volume due to phase transition between liquid and solid phases. Accordingly, the volatile characteristic, which is a fault of the paraffin material, can be prevented by the spherical coatings, and the operation of deformation force due to the change in volume can be reduced, thus securing the endurance reliability for long-term use.

(7) The heat accumulator S2 includes the inlet end and cover plates 15 and 16, the outlet end and cover plates 17 and 18, and the tank constituting elements 19 as the constituent parts. Moreover, the inlet pipe 6 is fixed to the inlet end plate 15, and the outlet pipe 7 is fixed to the outlet end plate 17. Furthermore, on the third partition walls 19c separating the liquid reserving portion spaces 19h of the tank constituting elements 19, the inner ribs 19d protruding in the direction orthogonal to the flow of the heat medium from the inlet to outlet is formed. Accordingly, the heat storage material encapsulated in the heat storage layer 5 has high heat absorption and release efficiencies, thus accelerating the heat exchange. It is therefore possible to provide a high latent heat effect by the heat storage material.

(8) Each of the tank constituting elements 19 includes the first to third partition walls 19a to 19c coaxially arranged. The heat-insulating layer space 19f is formed between the first and second partition walls 19a and 19b, and the heat storage layer space 19g is formed between the second and third partition walls 19b and 19c. The liquid reserving portion space 19h is surrounded by the third partition wall 19c. The plurality of tank constituting elements 19 are stacked, and the openings of the stacked tank constituting elements 19 at the both ends are closed by the inlet and outlet cover plates 16 and 18, thus constituting a container. The liquid reserving portion 1 is composed of the liquid reserving portion spaces 19h made to communicate with each other by stacking the tank constituting elements 19, and the vacuum heat-insulating layer 2 is composed of the heat-insulating layer spaces 19f which are made to communicate by stacking the tank constituting elements 19 and then evacuated. The heat storage layer 5 is composed of the heat storage layer spaces 19g made to communicate by stacking the tank constituting elements 19. Accordingly, it is possible to provide the stacking-type heat accumulator S2 which includes the heat storage layer 5 and vacuum heat-insulating layer 2 at the outer periphery of the liquid reserving portion 1 and has a high heat storage performance and high responsiveness to the request to change the necessary capacity.

(9) The heat accumulator S2 is manufactured as follows: The plurality of tank constituting elements 19 are stacked on each other with the brazing filler metal applied thereto, and the openings of the stacked tank constituting elements 19 at the both ends are closed with the inlet and outlet cover plates 16 and 18, thus temporarily assembling a container. Vacuum brazing is then performed to evacuate the temporarily assembled container within the furnace and then to increase the temperature thereof to evacuate both the heat-insulating layer 2 and heat storage layer 5. The evacuated heat storage layer 5 is filled with the heat storage material P by vacuum suction. In other words, fixing of the parts and evacuation are both performed at the vacuum brazing process. Accordingly, compared to the case where the parts are fixed by welding, brazing, or the like and then the vacuum heat-insulating layer is evacuated by a different process, it is possible to reduce variations in the degree of vacuum of the vacuum heat-insulating layer 2 and shorten the manufacturing time because of the simplified process. Moreover, by using the vacuum of the heat storage layer 5, the heat storage material P can be encapsulated by vacuum suction. Accordingly, the heat storage layer 5 can be uniformly filled with the heat storage material P within a short encapsulation time.

The method of manufacturing the heat accumulator 2 of Embodiment 2 can provide the effects enumerated below in addition to the effect (1) of the method of manufacturing the heat accumulator S1 of Embodiment 1.
(4) The heat accumulator S2 includes the heat storage layer 5 and vacuum heat-insulating layer 2 at the outer periphery of the liquid reserving portion 1, and the heat storage layer 5 is filled with the heat storage material P which absorbs and releases heat along with its phase transition between liquid and solid phases. The part processing processes (steps S1 to S5) processes the inlet and outlet cover plates 16 and 18 and the tank constituting elements 19 each of which includes the liquid reserving portion space 19h, heat storage layer space 19g, and heat-insulating layer space 19f and which is a plate material with a same cross-sectional shape, and the temporary assembly process (steps S6 to S8) stacks the plurality of tank constituting elements 19 and closes the openings thereof with the inlet and outlet cover plates 16 and 18, thus forming the liquid reserving portion 1, heat storage layer 5, and vacuum heat-insulating layer 2. Accordingly, it is possible to provide the method of manufacturing the stacking-type heat accumulator S2 which including the heat storage layer 5 and vacuum heat-insulating layer 2 at the outer periphery of the liquid reserving portion 1 and has a high heat storage performance and high responsiveness to the request to change the necessary capacity.

(5) In the joint surfaces of the stacked tank constituting elements 19, the air grooves 19j are provided at the joint places connecting the liquid reserving portion space 19h and heat-insulating layer space 19f with the heat storage space 19g interposed therebetween. In the brazing process (step 10), the liquid reserving portion spaces 19h and the heat-insulating layer spaces 19f communicate with each other through the air grooves 19j at evacuation within the furnace, and the air grooves 19j are filled and closed with the brazing filler metal by capillary at brazing by increasing the temperature within the furnace. Accordingly, air is smoothly evacuated from the heat-insulating layer spaces 19f by evacuation at the brazing process, thus further increasing the degree of vacuum of the vacuum heat-insulating layer 2.

(6) The brazing process (step S10) evacuates the heat storage layer 5 together with the vacuum heat-insulating layer 2 to less than the atmospheric pressure at the end of the process. After the brazing process, the heat storage material encapsulation process (step S12) is added, which fills the evacuated heat storage layer 5 with the heat storage material P by vacuum suction and then seals the encapsulation port. Accordingly, at encapsulating the heat storage material P in the heat storage layer 5 using the evacuated heat storage layer 5, the heat storage material P can be encapsulated uniformly and within a shorter time compared to the case of encapsulating the heat storage material P by pouring in the air atmosphere.

(7) The heat storage material encapsulation port 17a formed in the outlet end plate 17 includes the thin wall portion 17a' made thinner than the standard plate thickness. In the heat storage material encapsulation process (step S12), the tip of the injector charged with the heat storage material P is inserted into the heat storage material encapsulation port 17a to break through the thin wall portion 17a, thus the heat storage layer 5 is caused to suck the heat storage material P thereinto by vacuum suction. After the heat storage layer 5 is filled with the heat storage material P, the cap 20 is inserted into and engaged with the broken heat storage material encapsulation port 17a to close the port 17a. Accordingly, in encapsulating the heat storage material P in the heat storage layer 5 using the evacuated heat storage layer 5, by using the heat storage material encapsulation port 17a including the previously formed thin wall portion 17a', the heat storage material P can be encapsulated in the heat storage layer 5 with an easy insert operation. Moreover, the encapsulation port can be sealed with the easy operation of inserting the cap 20.

### EMBODIMENT 3

Embodiment 3 is an example of a method of manufacturing a multi-container type heat accumulator including a liquid reserving portion, a heat-insulting layer, and a heat storage layer while Embodiment 2 shows the method of manufacturing the stacking-type heat accumulator.

First, the constitution thereof is described.

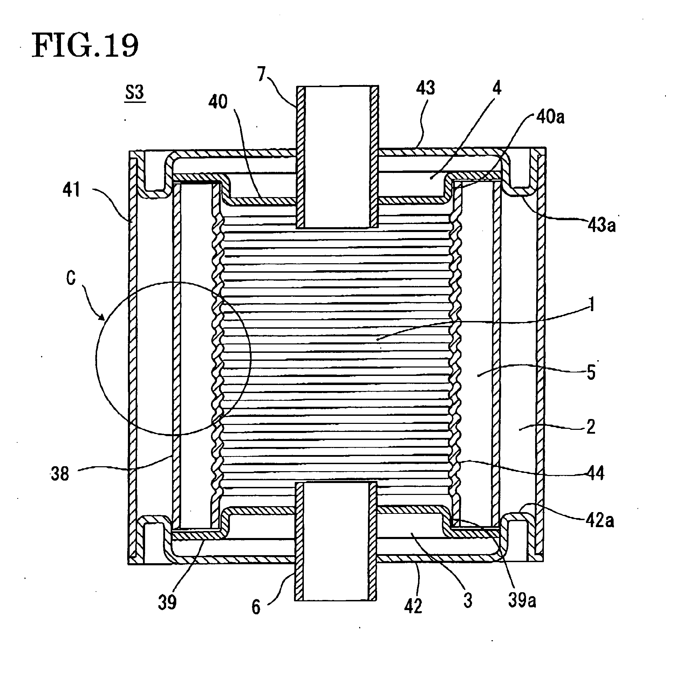

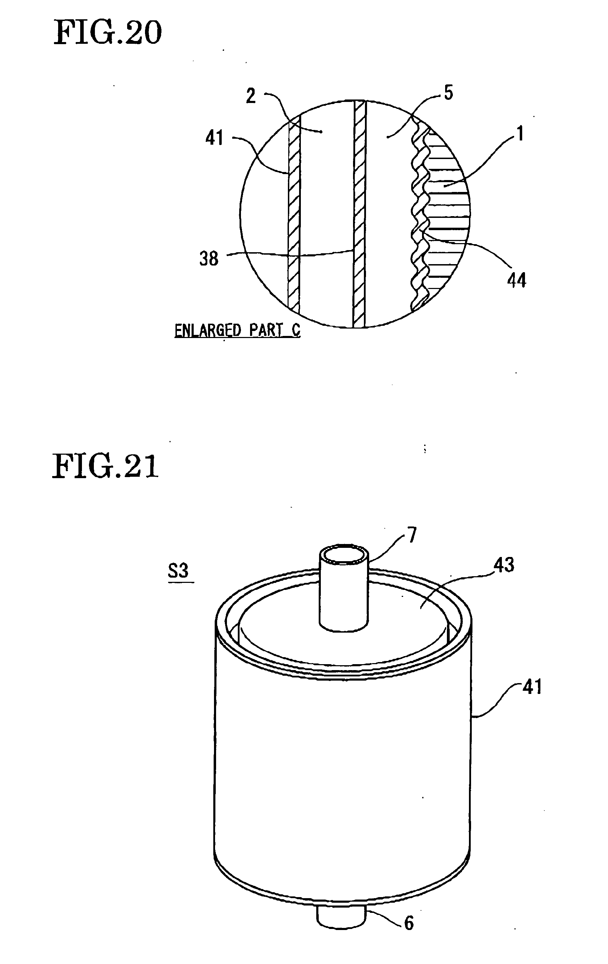

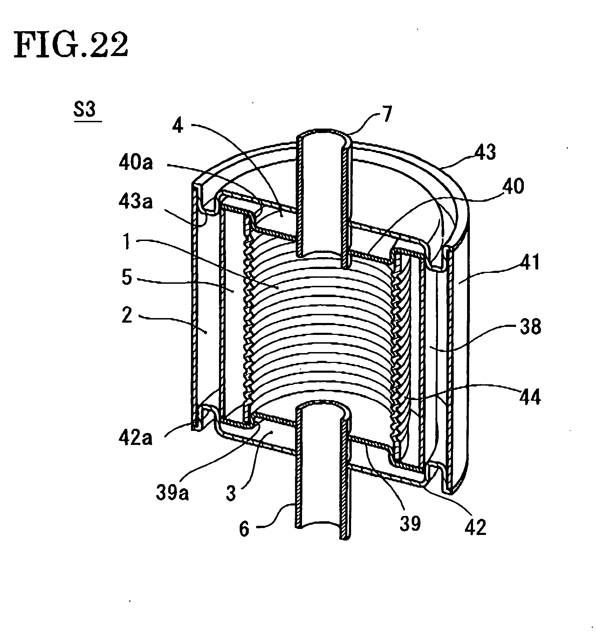

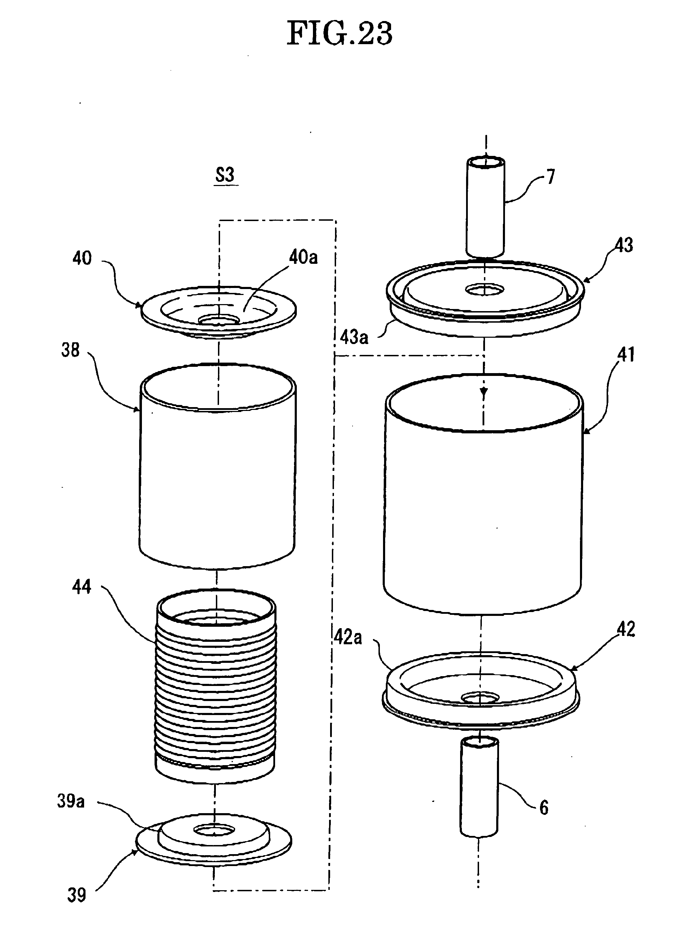

FIG. 19 is a vertical-sectional front view showing a heat accumulator manufactured by a manufacturing method of Embodiment 3. FIG. 20 is an enlarged view of part C of FIG. 19 showing the heat accumulator manufactured by the manufacturing method of Embodiment 3. FIG. 21 is an external perspective view showing the heat accumulator manufactured by the manufacturing method of Embodiment 3. FIG. 22 is a sectional perspective view showing the heat accumulator manufactured by the manufacturing method of Embodiment 3. FIG. 23 is an exploded perspective view showing the heat accumulator manufactured by the manufacturing method of Embodiment 3.

As shown in FIGS. 19 to 23, the heat accumulator S3 of Embodiment 3 includes a liquid reserving portion 1, a side vacuum heat-insulating layer (vacuum heat-insulating layer) 2, an inlet end vacuum heat-insulating layer 3 (vacuum heat-insulating layer), an outlet end vacuum heat-insulating layer 4 (heat-insulating layer), a heat storage layer 5, an inlet pipe 6, an outlet pipe 7, a first cylinder side plate 38 (a cylindrical member), a first inlet end plate 39 (an inlet plate member), a first outlet end plate 40 (an outlet plate member), a second cylinder side plate 41 (a cylindrical member), a second inlet end plate 42 (an inlet plate member), a second outlet end plate 43 (an outlet plate member), and an accordion cylinder plate 44 (a cylindrical member).

The heat accumulator S3 of Embodiment 3 includes the vacuum heat-insulating layers 2,3, and 4 at the outer periphery of the liquid reserving portion 1 and a heat storage layer 5 between the liquid reserving portion 1 and the side vacuum heat-insulating layer 2, the heat storage layer 5 being filled with a heat storage material which absorbs and releases heat along with its phase transition between liquid and solid phases.

The liquid reserving portion 1 is provided with the inlet pipe 6 through which a heat medium flows into the liquid reserving portion 1 and the outlet pipe 7 through which the heat medium flows out. The wall member separating the liquid reserving portion 1 and the heat storage layer 5 is the accordion cylinder plate 44 having roughness of a waveform sectional shape in a direction orthogonal to the flow of the heat medium from the inlet to the outlet.
The inlet pipe 6 penetrates the second and first inlet end plates 42 and 39 to be fixed, and the outlet pipe 7 penetrates the second and first outlet end plates 43 and 40 to be fixed.

The heat storage material filled in the heat storage layer 5 is a paraffin material as a latent heat storage material. The paraffin material stores heat of fusion during phase transition from the solid to the liquid phase in a temperature range not lower than the melting temperature and releases heat of solidification during phase transition from the solid phase to the liquid phase in a temperature range not higher than the freezing temperature. The heat storage material includes paraffin capsules, which include the paraffin material encapsulated in spherical coatings as microcapsules. The heat storage layer 5 is filled with aggregates of the paraffin capsules taking an account of a change in volume (about 10%) along with its phase transition between the liquid and solid phases.

The inner container includes the first cylinder side plate 38, first inlet end plate 39, and first outlet end plat 40. Within the first cylinder side plate 38, the accordion cylinder plate 44 is provided coaxially with the first cylinder side plate 38.

The outer container is provided outside of the inner container and includes the second cylinder side plate 41, second inlet end plate 42, and second outlet end plate 43.

The liquid reserving portion 1 is composed of a cylindrical space surrounded by the accordion cylinder plate 44, first inlet end plate 39, and first outlet end plate 40. Positioning of the accordion cylinder plate 44 relative to the both end plates 39 and 40 is performed by a step 39a formed in the first inlet end plate 39 and a step 40a formed in the first outlet end plate 40.

The heat-insulating layer includes the side vacuum heat-insulating layer 2, inlet end vacuum heat-insulating layer 3, and outlet end vacuum heat-insulating layer 4 and is composed of evacuated gap formed between the inner and outer containers.
The side vacuum heat-insulating layer 2 is formed as a cylindrical layer between the first and second cylinder side plates 38 and 41. The inlet end vacuum heat-insulating layer 3 is formed between the first and second inlet end plates 39 and 42. The outlet end vacuum heat-insulating layer 4 is formed between the first and second outlet end plates 40 and 43. The radial gap of the side vacuum heat-insulating layer 2 is positioned by an annular protrusion 42a formed in the second inlet side plate 42 and an annular protrusion 43a formed in the second outlet end plate 43 and can be maintained at constant without changing the relative position even if external force is applied thereto.

The heat storage layer 5 is composed of a cylindrical space formed between the first cylinder side plate 38 and accordion cylinder plate 44. The radial gap of the heat storage layer 5 can be maintained at constant by the first cylinder plate 38 positioned by the annular protrusions 42a and 43a and the accordion cylinder plate 44 positioned by the steps 39a and 40a.

Next, the operations thereof are described.

### [Heat storage operation]

With regard to the heat absorbing operation of the heat storage material, while a hot heat medium circulates through the liquid reserving portion 1 within the heat accumulator S3 through a flow from the inlet pipe 6 to the outlet pipe, the heat storage material within the heat storage layer 5 receives heat from the hot heat medium through the accordion cylinder plate 44. Upon receiving the heat, the heat storage layer increases in temperature. When the temperature of the heat storage material reaches the melting point of the heat storage material, the heat storage material changes the phase thereof from the solid to the liquid phase and absorbs heat energy during this phase transition.
In Embodiment 3, the heat storage material includes paraffin capsules. Accordingly, when the temperature of the heat storage material is as low as less than the melting point, the encapsulated paraffin is solid like wax. On the other hand, when the temperature of the heat storage material reaches the melting point or more, solid paraffin gradually liquefies and becomes completely liquid within the capsules when the heat storage material absorbs heat at maximum.

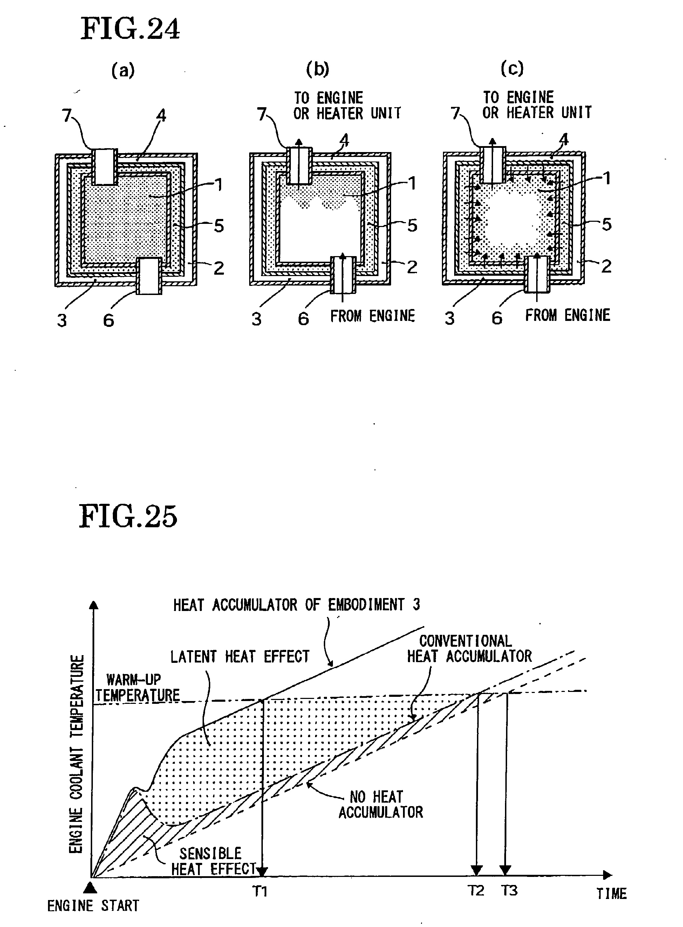

With regard to the operation of storing heat in the heat medium within the liquid reserving portion 1, when the hot heat medium passing the liquid reserving portion 1 stops circulating, as shown in FIG. 24(a), part of the hot heat medium is enclosed in the liquid reserving portion 1 surrounded by two layers of each of the vacuum heat-insulating layers 2 to 4 and the heat storage layer 5 and is prevented from cooling. The heat medium stored in the liquid reserving portion 1 is kept hot.
In other words, even if the circulation of the hot medium is stopped for a long time and the outside temperature around the heat accumulator S3 becomes low, the double heat-insulating structure of each of the vacuum heat-insulating layers 2 to 4 and the heat storage layer 5 minimizes the heat energy escaping from the heat medium stored in the liquid reserving portion 1. It is therefore possible to achieve so high heat retention that the heat medium of the liquid reserving portion 1 is kept hot even after a long period of time.

### [Heat Releasing Operation]

With regard to the operation of releasing the hot heat medium, in the case of using the hot heat medium within the liquid reserving portion 1 of the heat accumulator S3, first the hot heat medium of the liquid reserving portion 1 is released through the outlet pipe 7. Along with the release of the hot heat medium, as shown in FIG. 24(b), cold heat medium is introduced into the liquid reserving portion 1 of the heat accumulator S3 through the inlet pipe 6 and mixed with the hot heat media, lowering the temperature of the heat medium within the reservoir 1 of the heat accumulator S3.

With regard to the operation of releasing heat from the heat storage material, when the heat medium within the liquid reserving portion 1 of the heat accumulator S3 becomes cold and draws heat from the heat storage material within the heat storage layer 5 through the accordion cylinder plate 44, the temperature of the heat storage material is lowered. When the temperature of the heat storage material then reaches the freezing point, the phase of the heat storage material changes from the liquid to the solid phase as shown in FIG. 24(c). During the phase transition, the heat absorbed by the heat storage material is released, and the heat energy by the latent heat continues to be supplied to the heat medium through the accordion cylinder plate 44, thus preventing the temperature of the heat medium from being lowered.
In Embodiment 3, the heat storage material includes the paraffin capsules. Accordingly, when the temperature of the heat storage material is higher than the freezing point, the encapsulated paraffin is liquid. On the other hand, when the temperature of the heat storage material is reduced to the freezing point or less, liquid paraffin gradually solidifies to release heat and becomes solid within the capsules when the heat storage material releases heat at maximum.

### [Heat Storage Performance Comparison]

Comparison is made for the heat storage performance based on the comparative characteristics of the engine coolant temperature at the start of the engine shown in FIG. 25.
In FIG. 25, the characteristic indicated by a dotted line shows an engine coolant temperature characteristic in the case where there is no heat accumulator in the circulation circuit of engine coolant; the characteristic indicated by a dashed-dotted line shows an engine coolant temperature characteristic in the case where a conventional heat accumulator is provided in the circulation circuit of engine coolant; and the characteristic indicated by a solid line shows an engine coolant temperature characteristic in the case where the heat accumulator S3 is provided in the circulation circuit of engine coolant.

When the engine starts in the case where there is no heat accumulator in the circulation circuit of engine coolant, as indicated by the dotted line of FIG. 25, the engine coolant temperature which is equal to the outside temperature level at the start of the engine increases by the heat energy due to the engine being driven. In FIG. 25, it is assumed that the engine coolant temperature increases at a constant gradient.

When the engine starts in the case where the conventional heat accumulator (including only the vacuum heat-insulating layer) is provided in the circulation circuit of engine coolant, as indicated by the dashed-dotted line of FIG. 25, hot engine coolant is fed from the heat accumulator at the start of the engine, and accordingly the engine coolant temperature rises just after the start. However, the hot engine coolant is immediately mixed with cold engine coolant to drop in temperature. The engine coolant temperature then increases along the dotted line.

When the engine starts in the case where the heat accumulator S3 of Embodiment 3 is provided in the circulation circuit of engine coolant, as indicated by the solid line of FIG. 25, hot engine coolant is fed from the heat accumulator at the start of the engine, and the engine coolant temperature rises just after the start. Subsequently, the hot engine coolant is mixed with cold engine coolant to once drop in temperature. However, release of the heat stored in the heat storage material prevents the drop in temperature of the engine coolant, and the engine coolant temperature increases during and after the second cycle.

The comparison in performances of the heat accumulators by the coolant temperature characteristics relates to "sensible heat" and "latent heat." The "sensible heat" is heat energy stored without phase transition. The "latent heat" is heat energy absorbed or released along with its phase transitions between solid and liquid phases. The amount of heat stored in the form of "latent heat" is several orders of magnitude higher than that of "sensible heat."

On the other hand, a conventional heat accumulator (for example, see Japanese Patent Application publication No. 2004-20027) stores hot engine coolant, or utilizes only the "sensible heat." As shown in FIG. 25, therefore, once the stored hot engine coolant is used out, there is no addition of heat energy. In other words, the sensible heat effect is low. Accordingly, compared to time T3 for the engine coolant to reach warm-up temperature in the case where there is no heat accumulator in the engine coolant circulation circuit, time T2 for the engine coolant to reach the warm-up temperature is just slightly shortened.

On the other hand, the heat accumulator S3 of Embodiment 3 holds temperature retention while utilizing both the sensible heat stored in the heat medium and the latent heat released from the heat storage material of the heat storage layer 5. As shown in FIG. 25, therefore, to the sensible heat effect, the latent heat effect providing additional heat energy is added. Accordingly, compared to the time T3 for the engine coolant to reach the warm-up temperature in the case where there is no heat accumulator in the engine coolant circulation circuit, time T1 for the engine coolant to reach the warm-up temperature is considerably shortened.

### [Heat Accumulator Manufacturing Method]

The heat accumulator S3 of Embodiment 3 is manufactured by vacuum brazing including a part processing process, a temporary assembly process, and a brazing process.

### ·Part processing process

In the part processing process, the constituent parts constituting the heat accumulator S3 are processed. Specifically, the three cylindrical members 38, 41, and 44 forming the liquid reserving portion 1, heat storage layer 5, and vacuum heat-insulating layer 2, the inlet plate members 39 and 42, the outlet plate members 40 and 43, and the inlet and outlet pipes 6 and 7 are processed by pressing, punching, or the like.

### ·Temporary assembly process

In the temporary assembly process, the processed constituent parts are assembled into a container. Specifically, the three cylindrical members 38, 41, and 44 are assembled in a coaxial form, and the openings thereof are covered with the inlet plate members 39 and 42 and the outlet plate members 40 and 43, thus forming the liquid reserving portion 1, heat storage layer 5, and vacuum heat-insulating layer 2.

### ·Brazing process

In the brazing process, after brazing filer metal is applied to the assembled parts and the assembled parts are shaped into a container by a jig, the assembled container is put into a furnace and subjected to: a evacuation process of evacuating the inside of the furnace; a warming process of increasing the temperature within the furnace; a brazing process of fixing the parts with the melted brazing filler metal; and a cooling process of cooling the container fixed by brazing, thus completing fixation by brazing.
As for the encapsulation of the heat storage material in the heat storage layer 5, similar to the case of Embodiment 2, the heat storage layer 5 may be filled by evacuation, or the heat storage material may be poured into the heat storage layer 5 in the air atmosphere.
Through the aforementioned processes, the heat accumulator S3 is manufactured.

In the brazing process, therefore, by controlling the vacuum atmosphere in the furnace into a stable vacuum atmosphere, compared to the case of evacuation in the air atmosphere under individual control, the vacuum heat-insulating layers 2, 3, and 4 having stable and unvarying vacuum quality can be formed.

Moreover, in the brazing process, fixation of the parts and evacuation can be both achieved. Accordingly, compared to the case of evacuating the vacuum heat-insulating layers in another process after fixing the parts by welding or the like, the processes can be simplified, and the manufacturing efforts and time can be reduced.

Next, the effects thereof are described.
The method of manufacturing the heat accumulator S3 of Embodiment 3 can provide the following effects in addition to the effect of (1) of the method of manufacturing the heat accumulator S1 of Embodiment 1:
(8) The heat accumulator S2 includes the heat storage layer 5 and vacuum heat-insulating layer 2 at the outer periphery of the liquid reserving portion 1, and the heat storage layer 5 is filled with the heat storage material P which absorbs and releases heat along with its phase transition between liquid and solid phases. In the part processing process, the three cylindrical members 38, 41, and 44 forming the liquid reserving portion 1, heat storage layer 5, and vacuum heat-insulating layer 2, the inlet plate members 39 and 42, and the outlet end plate members 40 and 43 are processed. In the temporary assembly process, the three cylindrical members 38, 41, and 44 are assembled in a coaxial fashion, and the openings thereof are covered with the inlet plate members 39 and 42 and the outlet plate members 40 and 43, thus forming the liquid reserving portion 1, heat storage layer 5, and vacuum heat-insulating layer 2. It is therefore possible to provide the method of manufacturing the multi-container type heat accumulator S3 which includes the heat storage layer 5 and vacuum heat-insulating layer 2 at the outer periphery of the liquid reserving portion 1 and having a high heat storage performance.

### EMBODIMENT 4

Embodiment 4 is an example of an application of the heat accumulator S2 of Embodiment 2 or the heat accumulator S3 of Embodiment 3 (hereinafter, referred to as a heat accumulator S) to a vehicle-mounted thermal system in which a vehicle-mounted heat source and a vehicle-mounted heat demand source are connected through a heat medium circuit.

First, the constitution thereof is described.

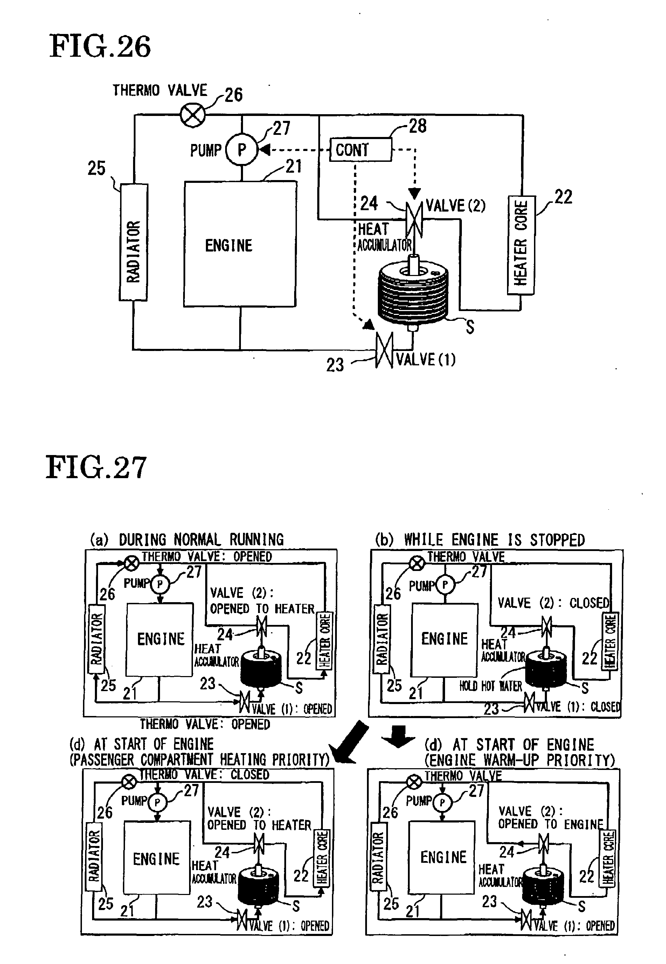

FIG. 26 is an engine coolant circulation circuit diagram showing an engine coolant circulation system (an example of a vehicle-mounted thermal system) including the heat accumulator S of Embodiment 4.
The engine 21 (the vehicle-mounted heat source) which heats engine coolant (heat medium) while being driven and the engine 21 and heater core 22 (the vehicle-mounted heat demand source) which demands heated engine coolant at the start of the engine from the engine stopped state where the temperature of the engine coolant decreases are connected through the engine coolant circulation circuit.
The engine 21 serves as the vehicle-mounted heat source because the engine 21 heats the coolant while being driven and also serves as the vehicle-mounted heat demand source because the temperature of the coolant drops while the engine 21 is stopped.
The heater core 22, which is arranged in a unit of an air conditioner controlling temperature in the passenger compartment, uses the engine coolant as the heating medium and therefore serves as the vehicle-mounted heat demand source.

In the engine coolant circulation circuit, the heat accumulator S whose inlet is connected to the engine 21 and whose outlet is connected to the engine 21 and heater core 22 is provided.
In the heat accumulator S, the heat storage layer 5 filled with the heat storage material which absorbs or releases heat during the phase transition between liquid and solid phases is provided between the liquid reserving portion 1 and each of the heat-insulating layers 2, 3, and 4 (see Embodiments 2 and 3).

The circuit connecting the engine 21 and the inlet of the heat accumulator S is provided with a first valve 23, and the circuit connecting the outlet of the heat accumulator S and the engine 21 and heater core 22 is provided with a second valve 24. The engine coolant circulation circuit connecting the engine 21 and radiator 25 is provided with a thermo-valve 26 and a circulation pump 27.

The operations of the first and second valves 23 and 24 and circulation pump 27 are controlled by a controller 28 (a heat medium circulation controlling unit).

The controller 28, basically, makes control to open the first and second valve 23 and 24 while the engine is being driven; closes the first and second valves 23 and 24 when the engine 21 stops; and open the first and second valves 23 and 24 when the engine 21 starts.
On the other hand, in the case of Embodiment 4, there are two vehicle-mounted demand sources. The controller 28 therefore makes control to open the second valve 24 to the engine 21 at the start of the engine when the engine warm-up has priority and open the second valve 24 to the heater core 22 at the start of the engine while the passenger compartment heating has priority.

Next, the operations thereof are described.

### [Heat Storing Operation]

During normal running state by engine drive, by the controller 28, the first valve 23 is opened; and during use of a heater, the second valve 24 is opened to the heater core 22; and the circulation pump 27 is driven.
Accordingly, as shown in FIG. 27(a), hot engine coolant from the engine 21 passes the heat accumulator S from the inlet to the outlet and is further fed to the engine 21 through the heater core 22 during use of the heater. When the temperature of the engine coolant increases and reaches the melting point of the heat storage material, the heat storage material changes the phase thereof from the solid to the liquid phase and absorbs heat energy during this phase transition.

When the engine 21 stops, by the controller 28, the first and second valves 23 and 24 are closed, and the circulation pump 27 is stopped.
Accordingly, as shown in FIG. 27(b), the engine coolant is enclosed in the liquid reserving portion 1 surrounded by the two layers of each of the heat-insulating layers 2, 3, and 4 and the heat storage layer 5. The engine coolant stored in the heat accumulator S is therefore prevented from decreasing in temperature and is kept hot.

### [Engine Warm-up Priority]

Thereafter, when the engine warm-up has priority, at the start of the engine 21, by the controller 28, the first valve 23 is opened; the second valve 24 is opened to the engine 21; and the circulation pump is driven.
Accordingly, as shown in FIG. 27(c), the hot engine coolant stored in the heat accumulator S is fed to the engine 21 during the first cycle of the circulation cycles of the engine coolant. The hot engine coolant is affected by the temperature of the system environment and is mixed with cold engine coolant. The temperature of the engine coolant within the heat accumulator S therefore decreases.
However, during and after the second cycle where the temperature of the heat storage material decreases to the freezing point because of the decrease in temperature of the engine coolant within the heat accumulator S, the heat storage material changes the phase thereof from the liquid to the solid phase. The heat stored in the heat storage material is released during this phase transition, and the heat energy due to the latent heat continues to be supplied to the engine coolant. During and after the second cycle, the decrease in temperature of the engine coolant is prevented by the heat released from the heat storage material, and the engine coolant kept hot is fed to the engine 21.

### [Passenger Compartment Heating Priority]

On the other hand, when the passenger compartment heating has priority, at the start of the engine 21, by the controller 28, the first valve 23 is opened; the second valve 24 is opened to the heater core 22; and the circulation pump 27 is driven.
Accordingly, as shown in FIG. 27(d), the hot engine coolant stored in the heat accumulator S is fed to the heater core 22 during the first cycle of the circulation cycles of the engine coolant. The hot engine coolant is affected by the temperature of the system environment and is mixed with cold engine coolant. The temperature of the engine coolant within the heat accumulator S therefore decreases.
However, during and after the second cycle where the temperature of the heat storage material decreases to the freezing point because of the decrease in temperature of the engine coolant within the heat accumulator S, the heat storage material changes the phase thereof from the liquid to the solid phase. The heat stored in the heat storage material is released during this phase transition, and the heat energy due to the latent heat continues to be supplied to the engine coolant. During and after the second cycle, the decrease in temperature of the engine coolant is prevented by the heat released from the heat storage material, and the engine coolant kept hot is fed to the heater core 22.

Next, the effects thereof are described.
The engine coolant circulation system including the heat accumulator S of Embodiment 4 can provide the effects enumerated below:
(1) In the vehicle-mounted thermal system in which the vehicle-mounted heat source which heats the heat medium while the power unit is being driven is connected, through the heat medium circuit, to the vehicle-mounted heat demand source which requires the hot heat medium when the power unit starts from the power unit stopped state where the temperature of the heat medium decreases, the heat medium circuit is provided with the heat accumulator S whose inlet is connected to the vehicle-mounted heat source and whose outlet is connected to the vehicle-mounted heat demand source. The heat accumulator S includes the heat storage layer 5 between the liquid reserving portion 1 and each of the heat-insulating layer 2, 3, and 4, the heat storage layer 5 being filled with the heat storage material absorbing or releasing heat along with its phase transition between liquid and solid phases. The circuit connecting the vehicle-mounted heat source and the inlet of the heat accumulator S is provided with the first valve 23, and the circuit connecting the outlet of the heat accumulator S and the vehicle-mounted heat demand source is provided with the second valve 24. Furthermore, the vehicle-mounted thermal system includes the controller 28 which opens the first and second valves 23 and 24 while a power unit is being driven; closes the same when the power unit stops; and opens the same when the power unit starts. Accordingly, with such a simple heat medium circulation control, the hot heat medium continues to be fed to the vehicle-mounted heat demand source from the heat accumulator S utilizing "sensible heat" and "latent heat" at the start of the power unit. It is therefore possible to achieve expected engine warm-up promotion and an expected increase in passenger compartment heating performance.

(2) The vehicle-mounted heat source includes the engine 21 heating the coolant while being driven, and the vehicle-mounted heat demand source includes the engine 21 which decreases the temperature of the coolant while being stopped and the heater core 22 of the air conditioner using the engine coolant as the heating medium. The controller 28 opens the second valve 24 to the engine 21 at the start of the engine when the engine warm-up has priority and opens the second valve 24 to the heater core 22 at the start of the engine when the passenger compartment heating has priority. Accordingly, with such a simple heat medium circulation control, it is possible to achieve expected warm-up promotion of the engine 21 when the engine warm-up has priority and to achieve an expected increase in passenger compartment heating performance when the passenger compartment heating has priority.

### EMBODIMENT 5

Embodiment 5 is an example of, in the engine coolant circulation system including the heat accumulator S of Embodiment 4, further including a pump 29 in the circuit connecting the second valve 24 and heater core 22.

First, the constitution thereof is described.

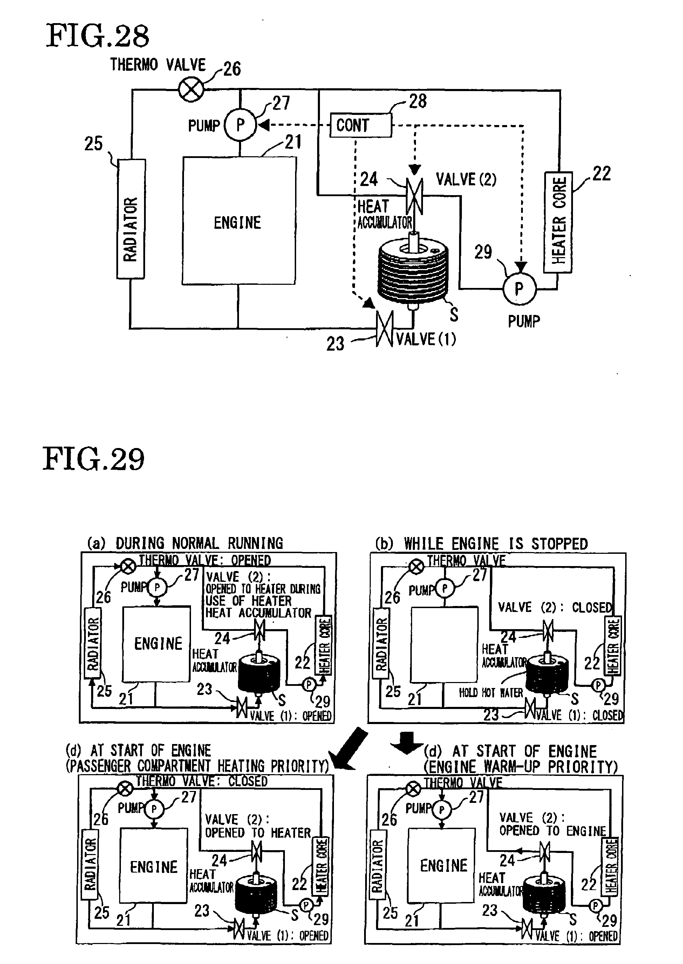

FIG. 28 is an engine coolant circulation circuit diagram showing an engine coolant circulation system (an example of the vehicle-mounted thermal system) including the heat accumulator S of Embodiment 5.
In Embodiment 5, the vehicle-mounted heat source includes the engine 21 which heats the coolant while being driven, and the vehicle-mounted heat demand source includes the engine 21 which decreases the temperature of the coolant while being stopped and the heater core 22 of an air conditioner using the engine coolant as the heating medium.

The circuit connecting the second valve 24 and heater core 22 is provided with the pump 29. The controller 28 opens the valve 24 to the engine 21 at the start of the engine 21 when the engine warm-up has priority When the passenger compartment heating has priority, at the start of the engine 21, the controller 28 opens the second valve 24 to the heater core 22 and activates the pump 29 to regulate the rate of flow from the heat accumulator S to the heater core 22. For the other constitution is the same as that of Embodiment 4, corresponding components are given the same reference numerals and symbols, and the description thereof is omitted.

Next, the operations thereof are described.

### [Heat Storing Operation]

During normal running state by engine drive, by the controller 28, the first valve 23 is opened, and during use of a heater, the second valve 24 is opened to the healer core 22, and the pump 29 and circulation pump 27 are driven.
Accordingly, as shown in FIG. 29(a), hot engine coolant from the engine 21 passes the heat accumulator S from the inlet to the outlet and, during use of the heater, is further fed to the engine 21 through the heater core 22. When the temperature of the engine coolant increases and reaches the melting point of the heat storage material, the heat storage material changes the phase thereof from the solid to the liquid phase and absorbs heat energy during this phase transition.

When the engine 21 then stops, by the controller 28, the first and second valves 23 and 24 are closed, and the pump 29 and circulation pump 27 are stopped.
Accordingly, as shown in FIG. 29(b), the engine coolant is enclosed in the liquid reserving portion 1 surrounded by the two layers of each of the heat-insulating layers 2, 3, and 4 and the heat storage layer 5. The decrease in temperature of the engine coolant stored in the heat accumulator S is therefore prevented, and the engine coolant is kept hot.

### [Engine Warm-up Priority]

Thereafter, when the engine warm-up has priority, at the start of the engine 21, by the controller 28, the first valve 23 is opened; the second valve 24 is opened to the engine 21; and the circulation pump 27 is driven.
Accordingly, as shown in FIG. 29(c), the hot engine coolant stored in the heat accumulator S is fed to the engine 21 during the first cycle of the circulation cycles of the engine coolant. The hot engine coolant is affected by the temperature of the system environment and is mixed with cold engine coolant. The temperature of the engine coolant within the heat accumulator S therefore decreases.
However, during and after the second cycle where the temperature of the heat storage material decreases to the freezing point because of the decrease in temperature of the engine coolant within the heat accumulator S, the heat storage material changes the phase thereof from the liquid to the solid phase. The heat stored in the heat storage material is released during this phase transition, and the heat energy due to the latent heat continues to be supplied to the engine coolant. During and after the second cycle, the decrease in temperature of the engine coolant is prevented by the heat released from the heat storage material, and the engine coolant kept hot is fed to the engine 21.

### [Passenger Compartment Heating Priority]

On the other hand, when the passenger compartment heating has priority, at the start of the engine 21, by the controller 28, the first valve 23 is opened; the second valve 24 is opened to the heater core 22 while the pump 29 is driven and controlled; and the circulation pump 27 is driven.
Accordingly, as shown in FIG. 29(d), the hot engine coolant stored in the heat accumulator S is fed to the heater core 22 during the first cycle of the circulation cycles of the engine coolant. The hot engine coolant is affected by the temperature of the system environment and is mixed with cold engine coolant. The temperature of the engine coolant within the heat accumulator S therefore decreases.
However, during and after the second cycle where the temperature of the heat storage material decreases to the freezing point because of the decrease in temperature of the engine coolant within the heat accumulator S, the heat storage material changes the phase thereof from the liquid to the solid phase. The heat stored in the heat storage material is released during this phase transition, and the heat energy due to the latent heat continues to be supplied to the engine coolant. During and after the second cycle, the decrease in temperature of the engine coolant is prevented by the heat released from the heat storage material, and the engine coolant kept hot is fed to the heater core 22 through the pump 29 regulating the flow rate.

Next, the effects thereof are described.
The engine coolant circulation system including the heat accumulator S of Embodiment 5 can provide the effects enumerated below in addition to the effect (1) of Embodiment 4:
(3) The vehicle-mounted heat source includes the engine 21 which heats the coolant while being driven, and the vehicle-mounted heat demand source includes the engine 21 which decreases the temperature of the coolant while being stopped and the heater core 22 of an air conditioner using the engine coolant as the heating medium. The circuit connecting the second valve 24 and the heater core 22 is provided with the pump 29. Furthermore, the controller 28 opens the second valve 24 to the engine 21 at the start of the engine 21 when the engine warm-up has priority and opens the second valve 24 to the heater core 22 and activates the pump 29 to regulate the rate of flow from the heat accumulate S to the heater core 22 at the start of the engine 21 when the passenger compartment heating has priority. Accordingly, with such a simple heat medium circulation control, when the engine warm-up has priority, it is possible to achieve expected engine warm-up promotion. Furthermore, when the passenger compartment heating has priority, it is possible to achieve an expected increase in passenger compartment heating performance and control the heating performance by regulating the flow rate.

### EMBODIMENT 6

Embodiment 6 is an example of an application of an electrical equipment coolant circulation system for a drive motor of a hybrid vehicle while Embodiments 4 and 5 are application examples of the engine coolant circulation system of an engine vehicle.

First, the constitution thereof is described.

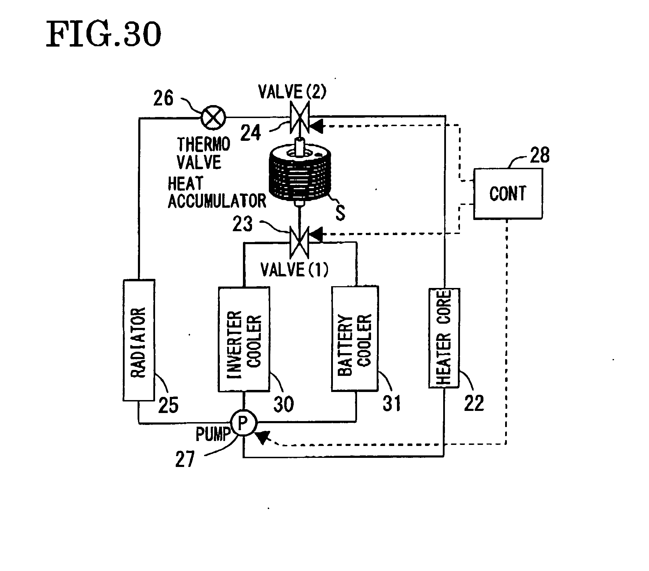

FIG. 30 is a coolant circulation circuit diagram showing an electrical equipment coolant circulation system for a drive motor (an example of the vehicle-mounted thermal system) including the heat accumulator S of Embodiment 6.

In Embodiment 6, the vehicle-mounted source includes an inverter cooler 30 which heats inverter coolant while being driven and a battery cooler 31 which heats battery coolant while being driven. The vehicle-mounted heat demand source includes the heater core 22 of an air conditioner using the inverter and battery coolant as the heating medium.
Herein, the drive motor of the hybrid vehicle is a high output three-phase AC motor or the like. Accordingly, the inverter which converts alternating current (motor side) to direct current (battery side) and vice versa is large-size and requires water cooling because the switching circuit, capacitors, and the like generate heat. As for the driving battery, a large-size battery for a driving motor is mounted separately from the battery for vehicle-mounted electrical equipment and requires water cooling.

The controller 28 makes control to open the first and second valves 23 and 24 at the start of the engine. For the other constitution is the same as that of Embodiments 4 and 5, the corresponding components are given the same reference numerals and symbols, and the description thereof is omitted.

Next, the operations thereof are described.

### [Heat Storing Operation]

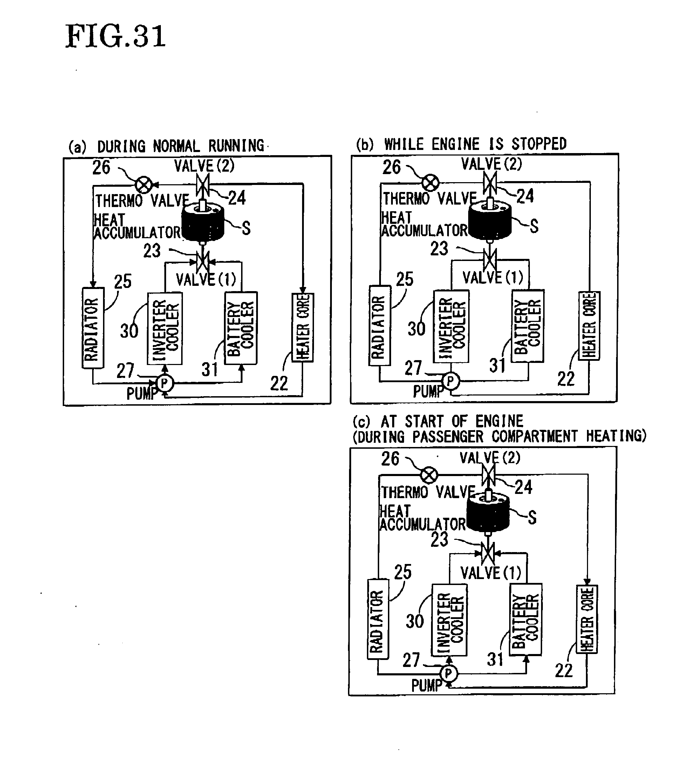

During normal running state by engine drive, by the controller 28, the first and second valves 23 and 24 are opened, and the circulation pump 27 is driven.
Accordingly, as shown in FIG. 31(a), hot coolant from the inverter cooler 30 and battery cooler 31 passes the heat accumulator S from the inlet to the outlet and is further fed to the radiator 25 and heater core 22. When the temperature of the coolant increases and reaches the melting point of the heat storage material, the heat storage material changes the phase thereof from the solid to the liquid phase and absorbs heat energy during this phase transition.

When the engine is stopped, by the controller 28, the first and second valves 23 and 24 are closed, and the circulation pump 27 is stopped.
Accordingly, as shown in FIG. 31(b), the coolant is enclosed in the liquid reserving portion 1 surrounded by the two layers of each of the heat-insulating layers 2, 3, and 4 and the heat storage layer 5, so that the temperature of the coolant stored in the heat accumulator S2 is prevented from decreasing. The coolant is therefore kept hot.

### [Engine Start]

At the start of the engine (at the start of passenger compartment heating), by the controller 28, the first and second valves 23 and 24 are opened, and the circulation pump 27 is driven.
Accordingly, as shown in FIG. 31 (c), the hot engine coolant stored in the heat accumulator S is fed to the heater core 22 during the first cycle of the circulation cycles of the coolant. The hot coolant is affected by the temperature of the system environment and is mixed with cold coolant. The temperature of the coolant within the heat accumulator S therefore decreases.
However, during and after the second cycle where the temperature of the heat storage material decreases to the freezing point because of the decrease in temperature of the coolant within the heat accumulator S, the heat storage material changes the phase thereof from the liquid to the solid phase. The heat stored in the heat storage material is released during this phase transition, and the heat energy due to the latent heat continues to be supplied to the coolant. During and after the second cycle, the decrease in temperature of the engine coolant is prevented by the heat released from the heat storage material, and the coolant kept hot is fed to the heater core 22.

Next, the effects thereof are described.
The electrical equipment coolant circulation system for a drive motor including the heat accumulator S of Embodiment 6 can provide the effect below in addition to the effect (1) of Embodiment 4:
(4) The vehicle-mounted heat source includes the inverter cooler 30 which heats the inverter coolant while being driven and the battery cooler 31 which heats the battery coolant while being driven. The vehicle-mounted heat demand source includes the heater core 22 of an air conditioner using the inverter and battery coolant as the heating medium. The controller 28 makes control to open the first and second valves 23 and 24 at the start of the engine. Accordingly, it is possible to achieve an expected increase in passenger compartment heating performance at the start of the engine.

### EMBODIMENT 7

Embodiment 7 is an example of, in the electrical equipment coolant circulation system for a drive motor including the heat accumulator S of Embodiment 6, further including a pump 29 for the circuit connecting the second valve 24 and heater core 22.

First, the constitution thereof is described.

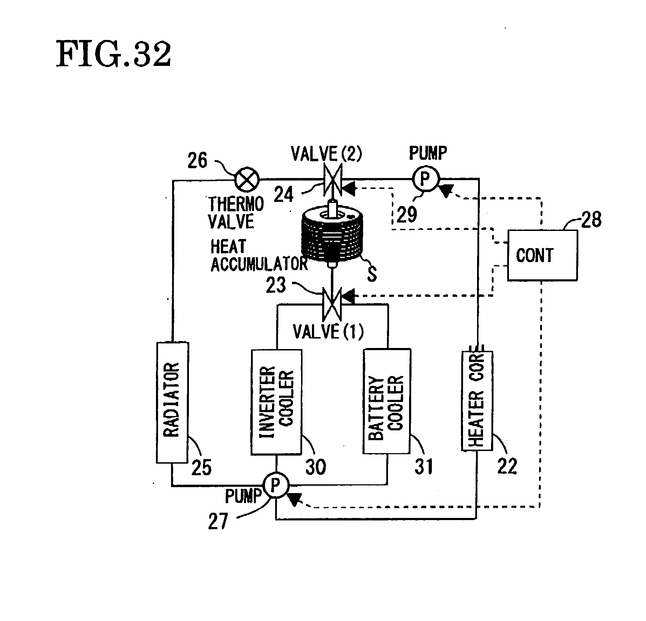

FIG. 32 is a coolant circulation circuit diagram showing an electrical equipment coolant circulation system for a drive motor (an example of the vehicle-mounted thermal system) including the heat accumulator S of Embodiment 7.

In Embodiment 7, the vehicle-mounted heat source includes the inverter cooler 30 which heats the inverter coolant while being driven and the battery cooler 31 which heats the battery coolant while being driven. The vehicle-mounted heat demand source includes the heater core 22 of an air conditioner using the inverter and battery coolant as the heating medium.

The circuit connecting the second valve 24 and heater core 22 is provided with the pump 29. The controller 28 makes control at the start of the engine 21 to open the first and second valves 23 and 24 at the start of the engine and activate the pump 29 to regulate the rate of flow from the heat accumulator S to the heater core 22. Since the other constitution is the same as that of Embodiment 4, corresponding components are given the same reference numerals and symbols, and the description thereof is omitted.

Next, the operations thereof are described.

### [Heat Storing Operation]

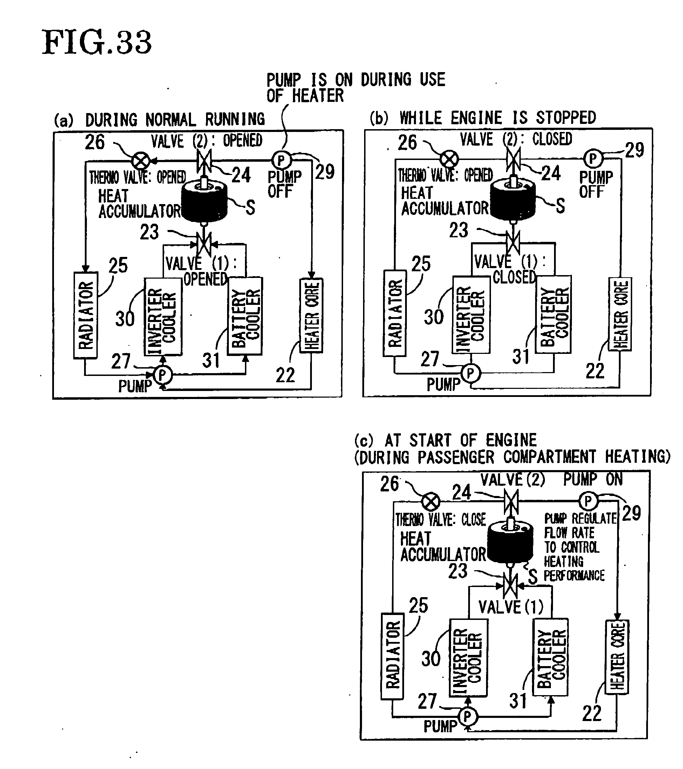

During normal running state where one of the engine and motor is being driven, by the controller 28, the first and second valves 23 and 24 are opened; and circulation pump 27 are driven. Moreover, during use of the heater, the pump is driven.
Accordingly, as shown in FIG. 33(a), hot coolant from the inverter and battery coolers 30 and 31 passes the heat accumulator S from the inlet to the outlet and is further fed to the radiator 25 and to the heater core 22 during use of the heater. When the temperature of the engine coolant increases and reaches the melting point of the heat storage material, the heat storage material changes the phase thereof from the solid to the liquid phase and absorbs heat energy during this phase transition.

When the engine then stops, by the controller 28, the first and second valves 23 and 24 are closed, and the pump 29 and circulation pump 27 are stopped.
Accordingly, as shown in FIG. 33 (b), the coolant is enclosed in the liquid reserving portion 1 surrounded by the two layers of each of the heat-insulating layers 2, 3, and 4 and the heat storage layer 5. The temperature of the engine coolant stored in the heat accumulator S is therefore prevented from decreasing, and the engine coolant is kept hot.

### [Engine Start]

At the start of the engine (at the start of passenger compartment heating), by the controller 28, the first and second valves 23 and 24 are opened; the circulation pump 27 is driven; and the pump 29 is driven for regulating the flow rate.
Accordingly, as shown in FIG. 33 (c), the hot coolant stored in the heat accumulator S is fed to the heater core 22 through the pump 29 during the first cycle of the circulation cycles of the coolant. The hot coolant is affected by the temperature of the system environment and is mixed with cold coolant. The temperature of the coolant within the heat accumulator S therefore decreases.
However, during and after the second cycle where the temperature of the heat storage material decreases to the freezing point because of the decrease in temperature of the coolant within the heat accumulator S, the heat storage material changes the phase thereof from the liquid to the solid phase. The heat stored in the heat storage material is released during this phase transition, and the heat energy due to the latent heat continues to be supplied to the coolant. During and after the second cycle, the decrease in temperature of the engine coolant is prevented by the heat released from the heat storage material, and the coolant kept hot is fed to the heater core 22 through the pump 29 regulating the flow rate.

Next, the effects thereof are described.
The electrical equipment coolant circulation system for a drive motor including the heat accumulator S of Embodiment 7 can provide the effect below in addition to the effect (1) of Embodiment 4:
(5) The vehicle-mounted heat source includes the inverter cooler 30 which heats the inverter coolant while being driven and the battery cooler 31 which heats the battery coolant while being driven. The vehicle-mounted heat demand source includes the heater core 22 of an air conditioner using the inverter and battery coolant as the heating medium. The circuit connecting the second valve 24 and the heater core 22 is provided with the pump 29. Furthermore, at the start of the engine, the controller 28 opens the first and second valves 23 and 24 and activates the pump 29 to regulate the rate of flow from the heat accumulate S to the heater core 22. Accordingly, it is possible to achieve an expected increase in passenger compartment heating performance at the start of the engine of the hybrid vehicle and control the heating performance by regulating the flow rate.

Hereinabove, the heat accumulator of the present invention, the method of manufacturing the heat accumulator, and the vehicle-mounted thermal system including the same are described based on Embodiments 1 to 7. However, the specific constitution is not limited to these embodiments, and various changes, additions, and the like can be made for the design without departing from the scope of the present invention according to claims.

Embodiments 1 and 2 show the examples where the plurality of tank constituting elements are stacked facing alternate directions, but the plurality of tank constituting elements are stacked facing a same direction. Moreover, in Embodiments 1 and 2, the inlet and outlet cover members and tank constituting elements are the constituent parts. However, the cover members may be omitted if the tank constituting elements are configured to have such a cross-sectional shape that allows the tank constituting elements to serve as the cover members. In other words, such a heat accumulator that includes the liquid reserving portion and heat-insulating layer formed by stacking the plurality of tank constituting elements composed of plate members of an identical cross-sectional shape is included in the present invention.

In Embodiment 2, the heat storage material is the paraffin material but may be another heat storage material such as polyethylene glycol whose phase transition temperature can be set according to the degree of polymerization or inorganic salt hydrate/aqueous solution with a wide range of phase transition temperature (for example, sodium acetate, sodium acetate mixture, calcium chloride hexahydrate, or the like).

In Embodiment 2, the heat storage material includes the paraffin capsules including the paraffin material encapsulated in spherical coatings as microcapsules. However, the heat storage material may be one subjected to another treatment/processing as follows: the heat storage material may be encapsulated in a resin container to be packaged or the heat storage material may be kneaded with resin to be shaped and laminate coated.

In the method of manufacturing the heat accumulator, the shapes of the constituent parts constituting the heat accumulator are not limited to the shapes shown in Embodiments 1 to 3 and may be varied according to the structure type of the heat accumulator. Moreover, in the temporary assembly process, the processed constituent parts may be assembled one dafter another into a container form without the sub-assembly process. In other words, the manufacturing method including at least: the part processing process to process the constituent parts constituting the heat accumulator; the temporary assembly process to assemble the processed constituent parts into a container; and the brazing process to evacuate the temporarily assembled container in a furnace and increase the temperature thereof to braze the constituent parts into a unit in the vacuum atmosphere is included in the present invention.

### INDUSTRIAL AVAILABILITY

Embodiments 1 and 2 show the examples of the application of the heat accumulator using water as the heat medium, but the heat medium may be liquid other than water. Moreover, the above embodiments show the examples of the application of the engine coolant circulation system of an engine vehicle and the electrical equipment coolant circulation system for a drive motor of a hybrid vehicle. The present invention can be also applied to heat accumulators for various purposes other than vehicles.

Embodiment 1 shows the example of the method of manufacturing the stacking-type heat accumulator including the liquid reserving portion and vacuum heat-insulating layer, and Embodiment 2 shows the example of the method of manufacturing the stacking-type heat accumulator including the liquid reserving portion, heat storage layer, and vacuum heat-insulating layer. Embodiment 3 shows the example of the method of manufacturing the multi-container heat accumulator including the liquid reserving portion, heat storage layer, and vacuum heat-insulating layer. However, the present invention can be applied to a method of manufacturing a multi-container heat accumulator including a liquid reserving portion and a vacuum heat-insulating layer. In other words, the present invention can be applied to a method of manufacturing a heat accumulator including at least a liquid reserving portion and a vacuum heat-insulating layer.

Embodiments 4 and 5 show the examples of the engine coolant circulation system of an engine vehicle as the vehicle-mounted heat system; and Embodiments 6 and 7 show the examples of the electrical equipment coolant circulation system for a drive motor of a hybrid vehicle as the vehicle-mounted heat system. The present invention can be also applied to an electrical equipment coolant circulation system for a drive motor of an electrical vehicle and the like. In other words, the present invention can be applied to a vehicle-mounted thermal system in which the vehicle-mounted heat source which heats the heat medium while a power unit is being driven and the vehicle-mounted demand source which requires hot heat medium when the power unit starts from the power unit stopped state where the temperature of the heat medium decreases are connected through the heat medium circuit.

## Claims

1. A heat accumulator, comprising:
a heat-insulating layer at the outer periphery of a liquid reserving portion,
the heat accumulator **characterized in that**
the liquid reserving portion and heat insulating layer are formed by stacking a plurality of tank constituting elements composed of plate members of an identical cross-sectional shape.

2. The heat accumulator according to claim 1, **characterized by** further comprising as constituent parts:
an inlet cover plate,
an outlet cover plate, and
the tank constituting elements, the heat accumulator **characterized in that**
an inlet pipe is fixed to the inlet cover plate,
an outlet pipe is fixed to the outlet cover plate,
each of the tank constituting elements includes first and second partition walls coaxially arranged; a heat-insulating layer space is formed between the first and second partition walls; and a liquid reserving portion space is surrounded by the second partition wall,
the plurality of tank constituting elements are stacked with openings of the stacked tank constituting elements at both ends closed with the inlet and outlet cover plates to constitute a container,
the liquid reserving portion is composed of the liquid reserving portion spaces made to communicate by stacking the tank constituting elements, and
the heat-insulating layer is composed of the heat-insulating layer spaces which are made to communicate by stacking the tank constituting elements and are evacuated.

3. The heat accumulator according to any one of claims 1 and 2,
**characterized in that**
the heat accumulator is manufactured by stacking the plurality of tank constituting elements with brazing filler metal applied thereto; closing the openings of the stacked tank constituting elements at the both ends with the inlet and outlet cover plates to temporarily assemble a container; and evacuating the temporarily assembled container in a furnace and increasing the temperature of the furnace for vacuum brazing.

4. The heat accumulator according to claim 1, **characterized by** further comprising:
a heat storage layer between the liquid reserving portion and the heat-insulating layer, the heat storage layer being filled with a heat storage material absorbing and releasing heat along with its phase transition between liquid and solid phases.

5. The heat accumulator according to claim 4, **characterized in that**
the heat storage material includes, as a latent heat storage material, a paraffin material storing heat of fusion during its phase transition from the solid to liquid phase in a temperature range not lower than a melting point and releasing heat of solidification during its phase transition from the liquid to solid phase in a temperature range not higher than a freezing point.

6. The heat accumulator according to claim 5, **characterized in that**
the heat storage material is paraffin capsules including the paraffin material encapsulated in spherical coatings as microcapsules, and
the heat storage layer is filed with aggregates of the paraffin capsules taking an account of a change in volume during the phase transition between the liquid and solid phases.

7. The heat accumulator according to any one of claims 4 to 6, **characterized by** further comprising as constituent parts:
an inlet end plate,
an inlet cover plate,
an outlet end plate,
an outlet cover plate, and
the tank constituting elements, the heat accumulator **characterized in that**
an inlet pipe is fixed to at least any one of the inlet cover and end plates,
an outlet pipe is fixed to at least any one of the outlet cover and end plates, and
an inner rib protruding in a direction orthogonal to a flow of a heat medium from an inlet to an outlet is formed on a partition wall separating the liquid reserving portion space of each of the tank constituting elements.

8. The heat accumulator according to any one of claims 4 to 7,
**characterized in that**
each of the tank constituting elements includes first, second, and third partition walls coaxially arranged; a heat-insulating layer space is formed between the first and second partition walls; a heat storage layer space is formed between the second and third partition walls; and a liquid reserving portion space is surrounded by the third partition wall,
the plurality of tank constituting elements are stacked with openings of the stacked tank constituting elements at both ends closed with the inlet and outlet cover plates to constitute a container,
the liquid reserving portion is composed of the liquid reserving portion spaces made to communicate by stacking the tank constituting elements,
the heat-insulating layer is composed of the heat-insulating layer spaces which are made to communicate by stacking the tank constituting elements and are evacuated, and
the heat storage layer composed of the heat storage layer spaces made to communicate by stacking the tank constituting elements.

9. The heat accumulator according to any one of claims 4 to 8,
**characterized in that**
the heat accumulator is manufactured by: stacking the plurality of tank constituting elements with brazing filler metal applied thereto; closing the openings of the stacked tank constituting elements at the both ends with the inlet and outlet cover plates to temporarily assemble a container; evacuating the temporarily assembled container in a furnace and increasing the temperature of the furnace for vacuum brazing to evacuate both the heat-insulating layer and heat storage layer; and then filling the evacuated heat storage layer with the heat storage material by vacuum suction.

10. A method of manufacturing a heat accumulator including a vacuum heat-insulating layer at the outer periphery of a liquid reserving portion, comprising:
a part processing step of processing constituent parts constituting the heat accumulator;
a temporary assembly step of assembling the processed constituent parts into a container; and
a brazing step of evacuating the temporarily assembled container in a furnace and increasing temperature of the furnace to braze the constituent parts into a unit in vacuum atmosphere.

11. The method of manufacturing a heat accumulator according to claim 10, **characterized in that**
the heat accumulator includes the vacuum heat-insulating layer at the outer periphery of the liquid reserving portion,
in the part processing step, an inlet cover plate, an outlet cover plate, and a plurality of tank constituting elements which are composed of plate members of an identical cross-sectional shape and which each have a liquid reserving portion space and a vacuum heat-insulating layer space are processed, and
in the temporary assembly step, the plurality of tank constituting elements are stacked, and then, openings of the stacked tank constituting elements are closed with the inlet and outlet cover plates to form the liquid reserving portion and vacuum heat-insulating layer.

12. The method of manufacturing a heat accumulator according to claim 11, **characterized in that**
the temporary assembly step includes: a brazing filler metal applying step of applying brazing filer metal to the tank constituting elements; a sub-assembly step of stacking the tank constituting elements with the brazing filler metal applied thereto; and an assembly step of closing the openings of the stacked tank constituting elements with the inlet and outlet cover plates to constitute a container.

13. The method of manufacturing a heat accumulator according to claim 10, **characterized in that**
the heat accumulator includes a heat storage layer and a vacuum heat-insulating layer at the outer periphery of the liquid reserving portion, and the heat storage layer is filled with a heat storage material absorbing and releasing heat along with its phase transition between liquid and solid phases,
in the part processing step, an inlet cover plate, an outlet cover plate, and a plurality of tank constituting elements which are composed of plate members of an identical cross-sectional shape and which each have a liquid reserving portion space, a heat storage layer space, and a vacuum heat-insulating layer space are processed, and
in the temporary assembly step, the plurality of tank constituting elements are stacked, and then, openings of the stacked tank constituting elements are closed with the inlet and outlet cover plates to form the liquid reserving portion, heat storage layer, and vacuum heat-insulating layer.

14. The method of manufacturing a heat accumulator according to claim 13, **characterized in that**
air grooves are provided at joint portions in joint surfaces of the stacked tank constituting elements, each joint portion connecting the liquid reserving portion space and the vacuum heat-insulating space with the heat storage layer space interposed therebetween, and
in the brazing step, at evacuation in the furnace, the liquid reserving portion spaces and the respective vacuum heat insulating layer spaces are allowed to communicate with each other through the air grooves and, at brazing by increasing the temperature of the furnace, the air grooves are filled with the brazing filler metal by capillary to close the air grooves.

15. The method of manufacturing a heat accumulator according to any one of claims 13 and 14, **characterized in that**
in the brazing step, the heat storage layer is evacuated together with the vacuum heat-insulating layer to lower than atmospheric pressure at the end of the process, and
the method further comprises, after the brazing step, a heat storage material encapsulation step of filling the evacuated heat storage layer with the heat storage material by vacuum suction and then sealing a portion through which the heat storage material is filled in.

16. The method of manufacturing a heat accumulator according to claim 15, **characterized in that**
a thin-wall portion made thinner than a standard thickness is formed in a heat storage material encapsulation port formed in any one of the inlet and outlet members, and
in the heat storage material encapsulation step, a tip of an injector charged with the heat storage material is inserted into the heat storage material encapsulation port to break through the thin-wall portion to suck the heat storage material into the heat storage layer by vacuum suction force, and then, a cap is inserted into and engaged with the broken heat storage material encapsulation port to close the broken heat storage material encapsulation port.

17. The method of manufacturing a heat accumulator according to claim 10, **characterized in that**
the heat accumulator includes a heat storage layer and a vacuum heat-insulating layer at the outer periphery of a liquid reserving portion, the heat storage layer being filled with a heat storage material absorbing and releasing heat along with its phase transition between liquid and solid phases,
in the part processing step, an inlet plate member, an outlet plate member, and three cylindrical members forming the liquid reserving portion, heat storage layer, and vacuum heat-insulating layer are processed, and
in the temporary assembly step, the three cylindrical members are assembled in a coaxial fashion, and then, openings thereof are closed with the inlet and outlet plate members to form the liquid reserving portion, heat storage layer, and vacuum heat-insulating layer.

18. A vehicle-mounted thermal system including a heat accumulator,
the vehicle-mounted thermal system comprising:
a vehicle-mounted heat source heating a heat medium while a power unit is being driven;
a vehicle-mounted heat demand source requiring a hot heat medium when the power unit starts from a stopped state where temperature of the heat medium decreases; and
a heat medium circuit connecting the vehicle-mounted heat source and the vehicle-mounted heat demand source, **characterized in that**
the heat medium circuit is provided with the heat accumulator whose inlet is connected to the vehicle-mounted heat source and whose outlet is connected to the vehicle-mounted heat demand source,
the heat accumulator includes a heat storage layer between a liquid reserving portion and a heat-insulating layer, the heat storage layer being filled with a heat storage material absorbing and releasing heat along with its phase transition between liquid and solid phases,
a circuit connecting the vehicle-mounted heat source and the inlet of the heat accumulator is provided with a first valve,
a circuit connecting the vehicle-mounted heat demand source and the outlet of the heat accumulator is provided with a second valve, and
the heat accumulator includes heat medium circulation control means which opens the first and second valves while the power unit is being driven; closes the first and second valves when the power unit stops; and opens the first and second valves when the power unit starts.

19. The vehicle-mounted heat system including the heat accumulator according to claim 18, **characterized in that**
the vehicle-mounted heat source is an engine heating coolant while being driven,
the heat-mounted heat demand source is the engine allowing temperature of coolant to decrease while being stopped and a heater core of an air conditioner using the engine coolant as a heating medium,
the heat medium circulation control means opens the second valve to the engine at the start of the engine when engine warm-up has priority and opens the second valve to the heater core at the start of the engine when passenger compartment heating has priority.

20. The vehicle-mounted heat system including the heat accumulator according to claim 18, **characterized in that**
the vehicle-mounted heat source is an engine heating coolant while being driven,
the heat-mounted heat demand source is the engine allowing temperature of coolant to decrease while being stopped and a heater core of an air conditioner using the engine coolant as a heating medium,
a circuit connecting the second valve and the heater core is provided with a pump,
the heat medium circulation control means opens the second valve to the engine at the start of the engine when engine warm-up has priority, and
the heat medium circulation control means opens the second valve to the heater core and activate the pump to regulate a rate of flow from the heat accumulator to the heater core at the start of the engine when passenger compartment heating has priority.

21. The vehicle-mounted heat system including the heat accumulator according to claim 18, **characterized in that**
the vehicle-mounted heat source is an inverter cooler heating inverter coolant while being driven and a battery cooler heating battery coolant while being driven,
the heat-mounted heat demand source is a heater core of an air conditioner using the inverter and battery coolant as a heating medium, and
the heat medium circulation control means opens the first and second valves at the start of an engine.

22. The vehicle-mounted heat system including the heat accumulator according to claim 18, **characterized in that**
the vehicle-mounted heat source is an inverter cooler heating inverter coolant while being driven and a battery cooler heating battery coolant while being driven,
the heat-mounted heat demand source is a heater core of an air conditioner using the inverter and battery coolant as a heating medium,
a circuit connecting the second valve and the heater core is provided with a pump,
and
the heat medium circulation control means opens the first and second valves and activates the pump to regulate a rate of flow from the heat accumulator to the heater core at the start of an engine.
